# EUROPÄISCHE PATENTSCHRIFT

(11) **EP 1 984 555 B1**
(45) Veröffentlichungstag und Bekanntmachung des Hinweises auf die Patenterteilung: **11.05.2016**
(21) Anmeldenummer: 07704113.5
(22) Anmeldetag: 24.01.2007
(51) Int. Cl.: D06M 13/432, D06M 15/227, D06M 15/263, D06M 15/423, D06M 15/572, D06P 1/52, C09D 123/00, C14C 7/00, D06N 3/14, C08G 18/79, C08G 18/48, C09D 123/08

(54) **VERFAHREN ZUM BEHANDELN VON TEXTILEN SUBSTRATEN**
PROCESS FOR TREATING TEXTILE SUBSTRATES
PROCEDE DE TRAITEMENT DE SUBSTRATS TEXTILES

(30) Priorität: 03.02.2006 EP 06101262; 24.03.2006 EP 06111689; 27.10.2006 DE 102006051415
(43) Veröffentlichungstag der Anmeldung: 29.10.2008
(73) Patentinhaber: BASF SE, 67056 Ludwigshafen am Rhein (DE)
(72) Erfinder: HÄBERLE, Karl, 67346 Speyer (DE); SIEMENSMEYER, Karl, 67227 Frankenthal (DE); NÖRENBERG, Ralf, 67063 Ludwigshafen (DE); ELIZALDE, Oihana, 68159 Mannheim (DE); HECHAVARRIA FONSECA, Maria Teresa, 68642 Bürstadt (DE); REICHERT, Jürgen, 67117 Limburgerhof (DE); STROBEL, Rolf, 72379 Hechingen (DE)
(74) Vertreter: Ricker, Mathias
(86) Internationale Anmeldenummer: PCT/EP2007/050682
(87) Internationale Veröffentlichungsnummer: WO 2007/090739

(56) Entgegenhaltungen:
- WO-A-98/04419
- US-A- 5 403 884

## Beschreibung

Die vorliegende Erfindung betrifft ein Verfahren zum Bedrucken, Färben oder Beschichten von textilen Substraten, dadurch gekennzeichnet, dass man mindestens eine wässrige Formulierung einsetzt, die enthält
(A) mindestens ein Bindemittel, das erhältlich ist durch Copolymerisation von Ethylen und (Meth)acrylsäure und gegebenenfalls einem oder mehreren weiteren Comonomeren,
(B) mindestens einem Umsetzungsprodukt von mindestens einem polymeren Carbodiimid (C), das mindestens eine endständige Gruppe aufweist, gewählt aus Carbonsäuregruppen und Isocyanatgruppen, mit mindestens einem Diol, Triol oder Polyol (D), oder
(C) mindestens ein polymeres Carbodiimid, das mindestens eine endständige Gruppe aufweist, gewählt aus Carbonsäuregruppen und Isocyanatgruppen, und
(D) gegebenenfalls mindestens ein Diol, Triol oder Polyol.

Weiterhin betrifft die vorliegende Erfindung wässrige Formulierungen, die zur Durchführung des erfindungsgemäßen Verfahrens geeignet sind, sowie ein Verfahren zur Herstellung der erfindungsgemäßen wässrigen Formulierungen.

Weiterhin betrifft die vorliegende Erfindung textile Substrate, bedruckt, gefärbt oder beschichtet nach dem erfindungsgemäßen Verfahren.

Viele textile Substrate bekommen erst nach einer Behandlung die gewünschten Gebrauchseigenschaften. Geeignete Behandlungen sind Bedrucken, Beschichten oder Färben. Dabei sind die Ansprüche an eine gute Behandlung hoch. Die textilen Substrate sollen hohe Gebrauchsechtheiten aufweisen, beispielsweise Reibechtheiten, Waschechtheiten und Nassreibechtheiten. Die Behandlung soll Wirk- und Effektstoffe, insbesondere Farbmittel, gut zur Wirkung kommen lassen. Weiterhin soll die Behandlung keine für die Gesundheit nachteiligen Wirkungen haben. Beispielsweise sollen keine gesundheitsgefährdenden Emissionen verursacht werden wie z. B. Formaldehyd. Schließlich soll die Behandlung einfach aufzubringen sein.

Gängige Behandlungsmittel sind bezüglich der vorstehend genannten Eigenschaften noch zu verbessern. Zwar sind Formaldehyd-freie Behandlungsmittel im Grundsatz bekannt, jedoch fehlen im Allgemeinen gute Echtheiten wie Reibechtheit, Waschechtheit und Nassreibechtheit. Auch der Graumaßstab ist in vielen Fällen noch zu verbessern.

Demgemäß wurde das eingangs definierte Verfahren gefunden.

Das eingangs definierte Verfahren geht aus von mindestens einem textilen Substrat. Unter Textil bzw. textilen Substraten sind im Rahmen der vorliegenden Erfindung Textilfasern, textile Halb- und Fertigfabrikate und daraus hergestellte Fertigwaren zu verstehen, die neben Textilien für die Bekleidungsindustrie beispielsweise auch Teppiche und andere Heimtextilien sowie technischen Zwecken dienende textile Gebilde umfassen. Dazu gehören auch ungeformte Gebilde, weiterhin linienförmige Gebilde wie Bindfäden, Fäden, Garne, Leinen, Schnüre, Seile, Zwirne sowie Körpergebilde wie beispielsweise Filze, Gewebe, Gewirke, Vliesstoffe und Watten. Textilien können natürlichen Ursprungs sein, beispielsweise Baumwolle, Wolle oder Flachs, oder synthetisch, beispielsweise Polyamid, Polyester, modifizierte Polyester, Polyestermischgewebe, Polyamidmischgewebe, Polyacrylnitril, Triacetat, Acetat, Polycarbonat, Polyolefine wie beispielsweise Polyethylen und Polypropylen, Polyvinylchlorid, weiterhin Polyestermikrofasern und Glasfasergewebe. Ganz besonders bevorzugt sind Polyester, Baumwolle und Polyolefine wie beispielsweise Polyethylen und Polypropylen sowie ausgewählte Mischgewebe, gewählt aus Baumwolle-Polyester-Mischgewebe, Polyolefin-Polyester-Mischgewebe und Polyolefin-Baumwolle-Mischgewebe.

Ganz besonders bevorzugt handelt es sich bei textilen Substraten um textile Substrate aus Polyolefin wie Polyethylen oder Polypropylen. Unter Polyolefinen sind im Rahmen der vorliegenden Erfindung vorzugsweise Polyethylen und Polypropylen zu verstehen, wobei Polyethylen Ethylenhomo- und Ethylencopolymere umfasst und Polypropylen Propylenhomo- und Propylencopolymere umfasst. Bevorzugte Ethylencopolymere bzw. Propylencopolymere sind Copolymere von Ethylen bzw. Propylen mit einer oder mehreren ethylenisch ungesättigten Verbindung, insbesondere mit einem oder mehreren Olefinen wie beispielsweise mit Propylen oder Ethylen oder einem oder mehreren α-Olefinen, beispielsweise 1-Buten, 1-Penten, 1-Hexen, 1-Octen, 1-Decen und 1-Dodecen zu verstehen. Besonders bevorzugt handelt es sich bei Ethylencopolymeren um Copolymere von Ethylen mit bis zu 30 Gew.-% Propylen, 1-Buten, 1-Hexen oder 1-Decen, und besonders bevorzugt handelt es sich bei Propylencopolymeren um Copolymere von Propylen mit bis zu 30 Gew.-% Ethylen, 1-Buten, 1-Hexen oder 1-Decen.

Polyolefine im Rahmen der vorliegenden Erfindung können beispielsweise ein mittleres Molekulargewicht M_{w} im Bereich von 50.000 bis 1.000.000 g/mol, bevorzugt von 100.000 bis 500.000 g/mol haben.

Polyolefin kann man nach an sich bekannten Methoden herstellen, beispielsweise im Falle von Polyethylen und Ethylencopolymeren durch radikalische (Co)polymerisation oder mit Hilfe eines Katalysators, beispielsweise mit Hilfe eines Phillips-, Ziegler-Natta- oder Metallocenkatalysators, und im Falle von Polypropylen und Propylencopolymeren mit Hilfe eines Katalysators, insbesondere mit Hilfe eines Ziegler-Natta-Katalysators oder eines Metallocenkatalysators.

Erfindungsgemäß behandelt man textiles Substrat mit mindestens einer wässrigen Formulierung. Dazu bringt man eine oder mehrere wässrige Formulierungen auf das zu behandelnde textile Substrat auf und führt gegebenenfalls weitere Arbeitsschritte durch, beispielsweise vor oder nach dem Aufbringen. In einer anderen Ausführungsform tränkt man textiles Substrat mit erfindungsgemäßer wässriger Formulierung.

Durch das Aufbringen bzw. Tränken können Pigmente (E) oder Wirkstoffe (F) von erfindungsgemäßer wässriger Formulierung überwiegend oder vollständig auf dem textilen Substrat bleiben, sie können aber auch zu einem gewissen Anteil in das textile Substrat eindringen.

In einer bevorzugten Ausführungsform behandelt man dadurch, dass man textiles Substrat mit wässriger Formulierung bedruckt. Zur Durchführung des Bedruckens kann man an sich bekannte Verfahren wie beispielsweise Siebdruckverfahren anwenden.

In einer anderen Ausführungsform der vorliegenden Erfindung behandelt man dadurch, dass man textiles Substrat mit wässriger Formulierung färbt. Zur Durchführung des Färbens kann man an sich bekannte Verfahren wie beispielsweise Klotz- und Ausziehverfahren anwenden.

In einer anderen Ausführungsform der vorliegenden Erfindung behandelt man dadurch, dass man textiles Substrat mit wässriger Formulierung beschichtet.

Zur Durchführung des erfindungsgemäßen Verfahrens beschichtet man unter Einsatz von mindestens einer wässrigen Formulierung, die enthält:
(A) mindestens ein Bindemittel, das Ethylen, (Meth)acrylsäure und gegebenenfalls ein oder mehrere weitere Comonomere einpolymerisiert enthält, im Rahmen der vorliegenden Erfindung auch kurz als Bindemittel (A) bezeichnet,
(B) mindestens ein Umsetzungsprodukt von mindestens einem polymeren Carbodiimid (C), das mindestens eine endständige Gruppe aufweist, gewählt aus Carbonsäuregruppen und Isocyanatgruppen, mit mindestens einem Diol, Triol oder Polyol (D), oder
(C) mindestens ein polymeres Carbodiimid, im Rahmen der vorliegenden Erfindung auch als polymeres Carbodiimid (C), das mindestens eine endständige Gruppe aufweist, gewählt aus Carbonsäuregruppen und Isocyanatgruppen, bezeichnet,
(D) gegebenenfalls mindestens ein Diol, Triol oder Polyol, im Rahmen der vorliegenden Erfindung auch kurz als Diol (D), Triol (D) oder Polyol (D) bezeichnet.

In einer Ausführungsform der vorliegenden Erfindung wählt man Bindemittel (A) aus Copolymeren, die Ethylen, (Meth)acrylsäure und gegebenenfalls ein oder mehrere weitere Comonomere einpolymerisiert enthalten, beispielsweise einen oder mehrere C₁-C₁₀-Alkylester von (Meth)acrylsäure, insbesondere Methylacrylat. Beispiele für weitere geeignete Comonomere sind Vinylester von Carbonsäuren, beispielsweise Vinylpropionat und Vinylacetat, und Isobuten.

In einer speziellen Ausführungsform der vorliegenden Erfindung wählt man Bindemittel (A) aus Copolymeren, die Ethylen und (Meth)acrylsäure einpolymerisiert enthalten und ansonsten keine weiteren Comonomere.

In einer bevorzugten Variante der beiden letztgenannten Ausführungsformen wählt man Bindemittel (A) aus Copolymeren, die einpolymerisiert enthalten:
65 bis 90 Gew.-%, bevorzugt 75 bis 85 Gew.-% Ethylen,
35 bis 10 Gew.-%, bevorzugt 15 bis 25 Gew.-% (Meth)acrylsäure,
0 bis 20 Gew.-%, bevorzugt 0,1 bis 15 Gew.-% weiteres Comonomer wie C₁-C₁₀-Alkylester von (Meth)acrylsäure,
jeweils bezogen auf gesamtes Bindemittel (A).

In einer bevorzugten Variante der beiden letztgenannten Ausführungsformen können Bindemittel (A) eine Schmelzemassefließrate (MFR) im Bereich von 1 bis 50 g/10 min, bevorzugt 5 bis 20 g/10 min, besonders bevorzugt 7 bis 15 g/10 min aufweisen, gemessen bei 160°C und einer Belastung von 325 g nach EN ISO 1133.

In einer bevorzugten Variante der beiden letztgenannten speziellen Ausführungsformen synthetisiert man Bindemittel (A) durch Copolymerisation von Ethylen, (Meth)acrylsäure und gegebenenfalls einem oder mehreren C₁-C₁₀-Alkylestern von (Meth)acrylsäure durch radikalisch initiierte Copolymerisation unter Hochdruckbedingungen, beispielsweise in gerührten Hochdruckautoklaven oder in Hochdruckrohrreaktoren. Die Herstellung in gerührten Hochdruckautoklaven ist bevorzugt. Gerührte Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Geeignete Druckbedingungen für die Polymerisation sind 500 bis 4000 bar, bevorzugt 1500 bis 2500 bar. Bedingungen dieser Art werden im Folgenden auch als Hochdruck bezeichnet. Die Reaktionstemperaturen liegen im Bereich von 170 bis 300°C, bevorzugt im Bereich von 195 bis 280°C.

Die Carboxylgruppen der einpolymerisierten (Meth)acrylsäure in Bindemittel (A) können in freier Form oder in vollständig oder partiell neutralisierter Form vorliegen, beispielsweise in mit Alkali, mit Ammoniak oder mit Amin vollständig oder partiell neutralisierter Form. Besonders geeignete Amine sind beispielsweise tertiäre Amine, z.B. (C₁-C₄-Alkyl)₃N, insbesondere Triethylamin, und Alkanolamine wie beispielsweise Ethanolamin, Diethanolamin, Triethanolamin, N-Methyl-ethanolamin, N,N-Dimethylethanolamin und N-(n-Butyl)ethanolamin.

Bindemittel (A) fällt vorzugsweise in Form sphärischer Partikel an, die in Wasser dispergiert sind. Die sphärischen Partikel können beispielsweise einen mittleren Durchmesser im Bereich von 10 nm bis 10 µm aufweisen, bevorzugt 20 nm bis 1 µm.

Im erfindungsgemäßen Verfahren eingesetzte wässrige Formulierung kann weiterhin mindestens ein Umsetzungsprodukt (B) enthalten, das durch Umsetzung von mindestens einem polymeren Carbodiimid (C) mit mindestens einem Diol, Triol oder Polyol (D) erhältlich ist. Derartige Umsetzungsprodukte werden im Rahmen der vorliegenden Erfindung auch kurz als Umsetzungsprodukt (B) bezeichnet.

Bei Carbodiimid (C) handelt es sich um ein polymeres Carbodiimid. Unter polymeren Carbodiimiden werden im Rahmen der vorliegenden Erfindung solche Verbindungen verstanden, die im Bereich von 2 bis 50, bevorzugt bis zu 20 -N=C=N-Gruppen pro Mol tragen.

Polymere Carbodiimide sind als solche bekannt und können nach an sich bekannten Methoden hergestellt werden, beispielsweise durch Kondensation bzw. Polykondensation von Diisocyanat in Gegenwart eines Katalysators, beispielsweise Trialkylphosphanoxid, acyclisch oder vorzugsweise cyclisch, auch als Phospholenoxid, Triarylphosphinoxid, Alkalimetallalkanoat, beispielsweise Natriumethanolat, Alkalimetallcarbonat, beispielsweise Natriumcarbonat oder Kaliumcarbonat, oder tertiärem Amin, beispielsweise Triethylamin. Besonders geeignete Katalysatoren sind Phospolanoxide und Phospholenoxide, z.B. 1-Phenyl-2-methylphospholenoxid-2, 1-Phenyl-2-methylphospholenoxid-3, 1-Methylphospholenoxid-2 und 1-Methylphospholenoxid-3. siehe beispielsweise US 2,853,473. Bei der Kondensation bzw. Polykondensation zu polymerem Carbodiimid wird Kohlendioxid abgespalten.

Beispiele für polymere Carbodiimide sind erhältlich durch Kondensation bzw. Polykondensation von mindestens einem aromatischen Diisocyanat, beispielsweise 2,4-Toluylendiisocyanat, 4,4'-Diphenylmethandiisocyanat oder 1,7-Naphthylendiisocyanat oder mindestens einem aliphatischen oder cycloaliphatischen Carbodiimid wie beispielsweise Isophorondiisocyanat, Trimethylendlisocyanat, Tetramethylendiisocyanat, Hexamethylendiisocyanat, Dodecamethylendiisocyanat, Cyclohexan-1,4-diisocyanat, 2,4-Hexahydrotoluylendiisocyanat, 2,6-Hexahydrotoluylendiisocyanat und 4,4'-Dicyclohexylmethandiisocyanat.

Bevorzugte polymere Carbodiimide sind Copolycarbodiimide, erhältlich durch Kondensation bzw. Polykondensation von mindestens einem aromatischen Diisocyanat, beispielsweise 2,4-Toluylendiisocyanat, 4,4'-Diphenylmethandiisocyanat oder 1,7-Naphthylendiisocyanat, mit mindestens einem aliphatischen oder cycloaliphatischen Carbodiimid wie beispielsweise Isophorondiisocyanat, Trimethylendiisocyanat, Tetramethylendiisocyanat, Hexamethylendiisocyanat, Dodecamethylendiisocyanat, Cyclohexan-1,4-diisocyanat, 2,4-Hexahydrotoluylendiisocyanat, 2,6-Hexahydrotoluylendiisocyanat und 4,4'-Dicyclohexylmethandiisocyanat.

Ganz besonders bevorzugt handelt es sich bei polymerem Carbodiimid (C) um ein polymeres Carbodiimid, erhältlich durch Polykondensation von m-TMXDI oder p-TMXDI 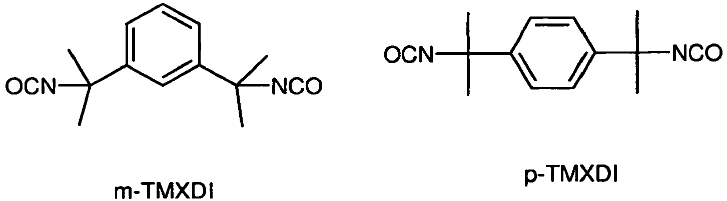 oder Mischungen von m-TMXDI und p-TMXDI mit 2 bis 20, bevorzugt bis 15 und besonders bevorzugt bis 10 -N=C=N-Gruppen pro Mol.

Reaktionspartner von polymerem Carbodiimid (C) ist mindestens ein Diol (D), Triol (D) oder Polyol (D).

Beispiele für geeignete Diole (D) sind Ethylenglykol, Diethylenglykol, Triethylenglykol, Tetraethylenglykol, 1,3-Propandiol, 1,4-Butandiol, Propylenglykol, Dipropylenglykol, Tripropylenglykol, Tetrapropylenglykol, Butylenglykol, 1,6-Hexandiol, 1,5-Pentandiol, Polyethylengykol mit einem mittleren Molekulargewicht Mₙ im Bereich von 200 bis 5.000 g/mol, Polypropylenglykol mit einem mittleren Molekulargewicht Mₙ im Bereich von 200 bis 5.000 g/mol, Polytetrahydrofuran mit einem Molekulargewicht Mₙ im Bereich von 200 bis 5.000 g/mol, Ethylenoxid-Propylenoxid-Copolymere, insbesondere Blockcopolymere von Ethylenoxid und Propylenoxid.

Beispiele für bevorzugte Diole (D) sind weiterhin aromatische Diole wie beispielsweise Resorcin, Hydrochinon, 4,4'-Diphenyldiol, Hydrochinon-di-(*para*-hydroxybenzoesäureester), Bisphenol A sowie Alkoxylierungsprodukte, insbesondere Ethoxylierungsprodukte und Propoxylierungsprodukte der vorstehend genannten aromatischen Diole, wie beispielsweise Verbindungen der allgemeinen Formel II 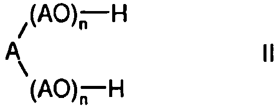 wobei die Variablen wie folgt definiert sind:
A ist ein divalenter organischer Rest mit einem bis 40 C-Atomen, bevorzugt 2 bis 30 C-Atomen, vorzugsweise ein organisches Diol, insbesondere ein organischer Rest mit mindestens einem, bevorzugt mindestens zwei Phenylringen, die substituiert sein können, beispielsweise *para-*O*-*C₆H₄*-*O*-, para,para'-*O*-*C₆H₄*-*C₆H₄*-*O*-, para,para'-*O*-*C₆H₄*-*C(CH₃*)*₂-C₆H₄*-*O*-,*
AO wird gewählt aus C₂-C₄-Alkylenoxid, beispielsweise Butylenoxid, insbesondere Ethylenoxid CH₂CH₂O ("EO") und Propylenoxid CH₂C(CH₃)O ("PO")
n verschieden oder vorzugsweise gleich und gewählt aus Zahlen im Bereich von null bis 50, bevorzugt 2 bis 20 und besonders bevorzugt 3 bis 15.
Bevorzugt sind Verbindungen der Formel III

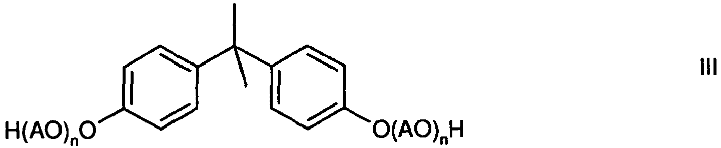

Beispiele für ganz besonders bevorzugte Diole (D) sind

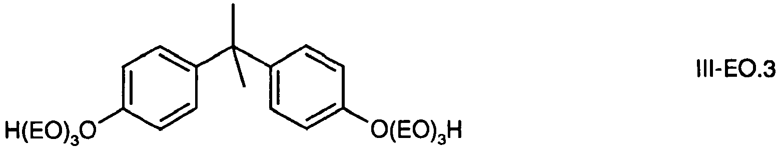

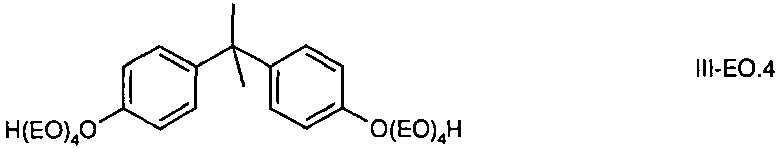

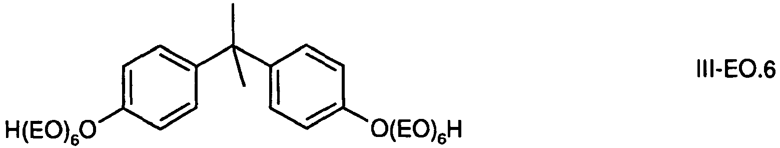

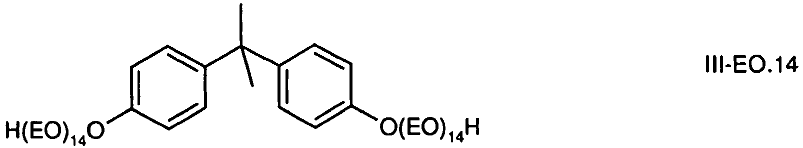

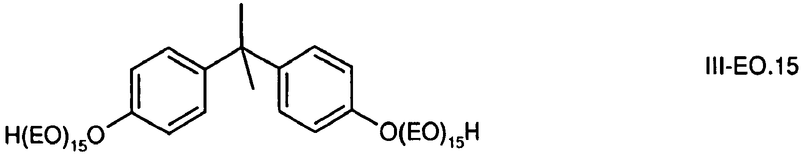

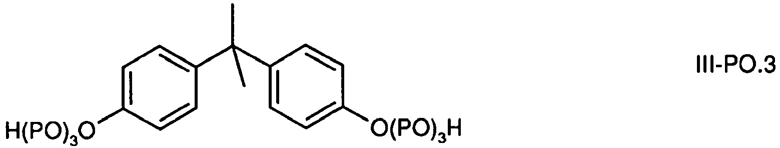

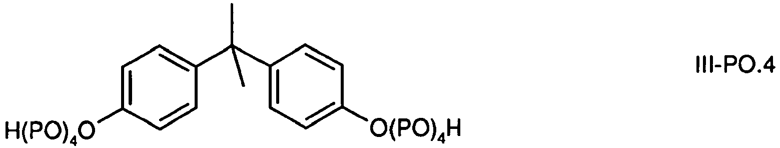

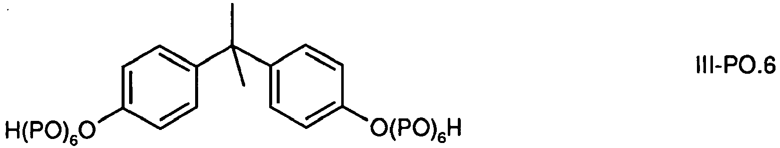

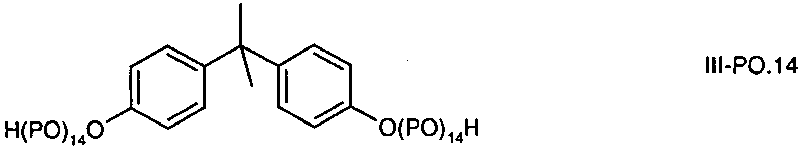

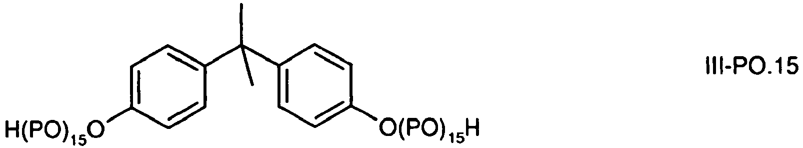

Beispiele für geeignete Triole (D) sind Glycerin, 1,1,1-Trimethylelolethan, 1,1,1-Trimethylolpropan, 1,1,1-Trimethylolbutan, 1,2,4-Butantriol und 1,2,3-Butantriol.

Beispiele für geeignete Polyole (D) sind aliphatische Verbindungen mit 4 oder mehr Hydroxylgruppen pro Molekül, beispielsweise Diglycerin, Sorbitol, Mannitol, Pentaerythrit, dimeres Pentaerythrit, Glucose, Fructose und Mannitol.

In einer Ausführungsform der vorliegenden Erfindung liegen in wässriger Formulierung, die im erfindungsgemäßen Verfahren eingesetzt wird, Umsetzungsprodukt (B), polymeres Carbodiimid (C) und Diol (D) bzw. Triol (D) bzw. Polyol (D) nebeneinander vor.

Zur Umsetzung von polymerem Carbodiimid (C) mit Diol (D), Triol (D) oder Polyol (D) kann man polymeres Carbodiimid (C) mit Diol (D), Triol (D) oder Polyol (D) vermischen und vorzugsweise miteinander erwärmen, beispielsweise auf Temperaturen im Bereich von 50 bis 120°C, bevorzugt 60 bis 100°C.

Bevorzugt wählt man für den Fall, dass man polymeres Carbodiimid (C) mit Diol (D), Triol (D) oder Polyol (D) umzusetzen wünscht, solche Carbodiimide aus, die mindestens eine, bevorzugt mindestens zwei endständige Gruppen aufweisen, die mit Hydroxylgruppen reagieren können. Beispiele für besonderes gut geeignete endständige Gruppen sind Carboxylgruppen und Isocyanatgruppen.

Die Umsetzung von polymerem Carbodiimid (C) mit Diol (D), Triol (D) oder Polyol (D) kann man mit oder ohne Katalysator durchführen.

Man kann Umsetzungsprodukt (B) isolieren und aufreinigen. Beispielsweise kann man nicht umgesetztes Diol (D), Triol (D) bzw. Polyol (D) abtrennen. In einer bevorzugten Ausführungsform der vorliegenden Erfindung verzichtet man jedoch auf das Isolieren und Aufreinigen von Umsetzungsprodukt (B) und setzt es gegebenenfalls mit Verunreinigungen ein.

Man kann polymeres Carbodiimid (C) und Diol (D) bzw. Triol (D) bzw. Polyol (D) in stöchiometrischen Mengen einsetzen. So ist es beispielsweise möglich, für den Fall, dass polymeres Carbodiimid (C) zwei Isocyanatgruppen pro Molekül aufweist, es mit zwei Mol Diol (D) bzw. Triol (D) bzw. Polyol (D) umzusetzen.

In einer anderen Ausführungsform setzt man polymeres Carbodiimid (C) und Diol (D) bzw. Triol (D) bzw. Polyol (D) in nicht stöchiometrischem Verhältnis miteinander um und reinigt anschließend auf oder verzichtet auf das Aufreinigen.

Umsetzungsprodukt (B) enthält in der Regel mindestens eine Carbodiimidgruppe pro Molekül.

In einer Ausführungsform der vorliegenden Erfindung enthält zur Durchführung des erfindungsgemäßen Verfahrens eingesetzte wässrige Formulierung mindestens ein polymeres Carbodiimid (C). Polymere Carbodiimide (C) sind vorstehend beschrieben. In einer Ausführungsform der vorliegenden Erfindung enthält zur Durchführung des erfindungsgemäßen Verfahrens eingesetzte wässrige Formulierung mindestens ein Diol (D), Triol (D) oder Polyol (D). Diole (D), Triole (D) und Polyole (D) sind vorstehend beschrieben.

In einer Ausführungsform der vorliegenden Erfindung setzt man mindestens ein Umsetzungsprodukt (B) ein, und zwar entweder statt polymerem Carbodiimid (C) und statt Diol, Triol oder Polyol (D), oder man setzt Umsetzungsprodukt (B) zusätzlich zu polymerem Carbodiimid (C) oder zusätzlich zu Diol, Triol oder Polyol (D) ein, oder man setzt Umsetzungsprodukt (B) zusätzlich zu polymerem Carbodiimid (C) und Diol, Triol oder Polyol (D) ein.

In einer Ausführungsform der vorliegenden Erfindung liegen in wässriger Formulierung, die im erfindungsgemäßen Verfahren eingesetzt wird, polymeres Carbodiimid (C) und gegebenenfalls Diol (D) bzw. Triol (D) bzw. Polyol (D) nebeneinander vor.

In einer Ausführungsform der vorliegenden Erfindung setzt man mindestens ein Umsetzungsprodukt (B) ein, das durch Umsetzung von mindestens einem Isocyanatgruppen-haltigen polymeres Carbodiimid (C) mit Diethylenglykol, Triethylenglykol, Tetraethylenglykol oder Polyethylenglykol erhältlich ist.

In einer Ausführungsform der vorliegenden Erfindung setzt man mindestens ein Umsetzungsprodukt (B) ein, das durch Umsetzung von einem polymeren Carbodiimid, erhältlich durch Polykondensation von m-TMXDI oder p-TMXDI oder Mischungen von m-TMXDI und p-TMXDI mit 2 bis 20, bevorzugt bis 15 und besonders bevorzugt bis 10 -N=C=N-Gruppen pro Mol, mit Polyethylenglykol erhältlich ist.

In einer Ausführungsform der vorliegenden Erfindung enthält wässrige Formulierung weiterhin mindestens ein Pigment (E).

Unter Pigmenten (E) sind im Rahmen der vorliegenden Erfindung praktisch nicht lösliche, dispergierte feinteilige, organische oder anorganische Farbmittel gemäß der Definition in DIN 55944 zu verstehen. Bevorzugt wählt man mindestens organisches Pigment und/oder Metallpigment aus.

### Beispielhaft ausgewählte organische Pigmente sind

Monoazopigmente: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
Disazopigmente: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
Anthanthronpigmente: C.I. Pigment Red 168 (C.I. Vat Orange 3);
Anthrachinonpigmente: C.I. Pigment Yellow 147 und 177; C.I. Pigment Violet 31;
Anthrachinonpigmente: C.I. Pigment Yellow 147 und 177; C.I. Pigment Violet 31;
Anthrapyrimidinpigmente: C.I. Pigment Yellow 108 (C.I. Vat Yellow 20);
Chinacridonpigmente: C.I. Pigment Red 122, 202 und 206; C.I. Pigment Violet 19;
Chinophthalonpigmente: C.I. Pigment Yellow 138;
Dioxazinpigmente: C.I. Pigment Violet 23 und 37;
Flavanthronpigmente: C.I. Pigment Yellow 24 (C.I. Vat Yellow 1);
Indanthronpigmente: C.I. Pigment Blue 60 (C.I. Vat Blue 4) und 64 (C.I. Vat Blue 6);
Isoindolinpigmente: C.I. Pigment Orange 69; C.I. Pigment Red 260; C.I. Pigment Yellow 139 und 185;
Isoindolinonpigmente: C.I. Pigment Orange 61; C.I. Pigment Red 257 und 260; C.I.
Pigment Yellow 109, 110, 173 und 185;
Isoviolanthronpigmente: C.I. Pigment Violet 31 (C.I. Vat Violet 1);
Metallkomplexpigmente: C.I. Pigment Yellow 117,150 und 153; C.I. Pigment Green 8;
Perinonpigmente: C.I. Pigment Orange 43 (C.I. Vat Orange 7); C.I. Pigment Red 194
(C.I. Vat Red 15);
Perylenpigmente: C.I. Pigment Black 31 und 32; C.I. Pigment Red 123, 149, 178, 179
(C.I. Vat Red 23), 190 (C.I. Vat Red 29) und 224; C.I. Pigment Violet 29;
Phthalocyaninpigmente: C.I. Pigment Blue 15, 15:1, 15:2, 15:3,15:4,15:6 und 16; C.I.
Pigment Green 7 und 36;
Pyranthronpigmente: C.I. Pigment Orange 51; C.I. Pigment Red 216 (C.I. Vat Orange 4);
Thioindigopigmente: C.I. Pigment Red 88 und 181 (C.I. Vat Red 1); C.I. Pigment Violet 38 (C.I. Vat Violet 3);
Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz);
C.I. Pigment Yellow 101 (Aldazingelb);
C.I. Pigment Brown 22.

Beispiele für besonders bevorzugte Pigmente sind: C.I. Pigment Yellow 138, C.I. Pigment Red 122 und 146, C.I. Pigment Violet 19, C.I. Pigment Blue 15:1, 15:2, 15:3 und 15:4, C.I. Pigment Black 7, C.I. Pigment Orange 5, 38 und 43 und C.I. Pigment Green 7.

Weitere geeignete Pigmente (E) sind metallische Pigmente wie beispielsweise Goldbronze, Silberbronze, Glitter. Weiterhin geeignet sind auch Pigmente (E), die in Abhängigkeit vom Blickwinkel unterschiedliche Farben aufweisen, wie beispielsweise Colour variable Pigments: Paliochrom, Variochrom sowie flüssigkristalline Effektpigmente auf Basis vernetzter oder hochvernetzer cholesterisch flüssigkristalliner Phasen.

Der mittlere Durchmesser von Pigment (E) liegt üblicherweise im Bereich von 20 nm bis 1,5 µm, bevorzugt im Bereich von 300 bis 500 nm.

Für den Fall, dass man Pigment (E) aus der Gruppe der Effektpigmente wählt, ist es bevorzugt, plättchenförmige Effektpigmente zu wählen, beispielsweise mit einem mittleren Durchmesser im Bereich von 100 nm bis 1,5 µm und einer Dicke im Bereich von 20 nm bis 200 nm, wobei er mittlere Durchmesser vorzugsweise mindestens doppelt so groß ist wie Dicke.

Die zur Durchführung des erfindungsgemäßen Verfahrens eingesetzte wässrige Formulierung kann weiterhin einen oder mehrere Wirkstoffe (F) enthalten, zusätzlich oder anstatt Pigment (E). Geeignete Wirkstoffe (F) können beispielsweise gewählt werden aus Flammfestmitteln, Duftstoffen, Insektenvemichtungsmitteln (Insektiziden) und Weichmachern. Als Beispiele für besonders bevorzugte Weichmacher seien Esterverbindungen, gewählt aus den Gruppen der mit Alkanolen vollständig veresterten aliphatischen oder aromatischen Di- oder Polycarbonsäuren und der mindestens einfach mit Alkanol veresterten Phosphorsäure genannt.

In einer Ausführungsform der vorliegenden Erfindung handelt es sich bei Alkanolen um C₄-C₁₈-Alkanole, bevorzugt C₆-C₁₄-Alkanole, verzweigt oder vorzugsweise unverzweigt.

Bevorzugte Beispiele für mit Alkanol vollständig veresterte aromatische Di- oder Polycarbonsäuren sind mit Alkanol vollständig veresterte Phthalsäure, Isophthalsäure und Mellithsäure; beispielhaft seinen genannt: Di-n-octylphthalat, Di-n-nonylphthalat, Di-n-decylphthalat, Di-n-octylisophthalat, Di-n-nonylisophthalat, Di-n-decylisophthalat.

Bevorzugte Beispiele für mit C₄-C₁₈-Alkanol vollständig veresterte aliphatische Di- oder Polycarbonsäuren sind beispielsweise Adipinsäuredi-n-butylester, Adipinsäurediisobutylester, Glutarsäuredi-n-butylester, Glutarsäurediisobutylester, Bernsteinsäuredi-n-butylester, Bernsteinsäurediisobutylester sowie Mischungen der vorstehend genannten Verbindungen.

Bevorzugte Beispiele für mindestens einfach mit Alkanol veresterte Phosphorsäure sind C₄-C₁₈-Alkyl-di-C₆-C₁₄-Aryl-Phosphate wie Isodecyldiphenylphosphat.

Weitere geeignete Beispiele für Weichmacher sind mindestens einfach mit C₁-C₁₀-Alkylcarbonsäure mindestens einfach veresterte aliphatische oder aromatische Di- oder Polyole.

Bevorzugte Beispiele für mindestens einfach mit C₁-C₁₀-Alkylcarbonsäure veresterte aliphatische oder aromatische Di- oder Polyole ist 2,2,4-Trimethylpentan-1,3-diolmonoisobutyrat.

Weitere geeignete Weichmacher sind Polyester, erhältlich durch Polykondensation von aliphatischer Dicarbonsäure und aliphatischem oder cycloaliphatischem Diol, beispielsweise Adipinsäure oder Bernsteinsäure oder 1,2-Cyclohexandiol oder 1,2- oder 1,4-Cyclohexandimethanol (als Isomerengemisch oder als eines der reinen Isomeren) und 1,2-Propandiol, vorzugsweise mit einem M_{w} von 200 bis 2.000 g/mol, und Polypropylenglykolalkylphenylether, vorzugsweise mit einem M_{w} von 450 bis 5.000 g/mol.

Weitere geeignete Weichmacher sind mit zwei verschiedenen Alkoholen veretherte Polypropylenglykole mit einem Molekulargewicht M_{w} im Bereich von 400 bis 800 g/mol, wobei vorzugsweise einer der Alkohole ein Alkanol, insbesondere ein C₄-C₁₈-Alkanol sein kann und der andere Alkohol vorzugsweise ein aromatischer Alkohol, beispielsweise o-Kresol, m-Kresol, p-Kresol und insbesondere Phenol sein kann.

Wünscht man eine Wasserdichtbeschichtung oder eine sogenannte Black-Out-Beschichtung (Sichtschutz) durchzuführen, so kann man auch schwarze oder weiße Festteilchen wie beispielsweise Kaolin, Ruß oder Titandioxid als Wirkstoff (F) einsetzen.

In einer Ausführungsform der vorliegenden Erfindung kann wässrige Formulierung einen oder mehrere Hilfsstoffe (G) enthalten. Hilfsstoffe (G) kann man beispielsweise wählen aus Verdickern, Lösemitteln, Netzmitteln, Entschäumern, Griffverbesserem, Dispergiermitteln, Wasserrückhaltemitteln, Antiabsetzmitteln und/oder Bioziden. Beispiele für geeignete Hilfsstoffe (G) sind unten genannt.

In einer Ausführungsform der vorliegenden Erfindung enthalten im erfindungsgemäßen Verfahren eingesetzte wässrige Formulierungen gegebenenfalls ein oder mehrere Mikrokapselmaterialien (H), im Rahmen der vorliegenden Erfindung auch als Mikrokapseln bezeichnet.

Die erfindungsgemäß enthaltenen Mikrokapseln sind Teilchen mit einem Kapselkern bestehend überwiegend, zu mehr als 95 Gew.-%, aus Latentwärmespeichermaterial und einem Polymer als Kapselwand. Der Kapselkern ist dabei abhängig von der Temperatur fest oder flüssig. Die mittlere Teilchengröße der Kapseln (Z-Mittel mittels Lichtstreuung) beträgt 0,5 bis 100 µm, bevorzugt 1 bis 80 µm insbesondere 1 bis 50 µm. Das Gewichtsverhältnis von Kapselkern zu Kapselwand beträgt im allgemeinen von 50:50 bis 95:5. Bevorzugt wird ein Kern/Wand-Verhältnis von 70:30 bis 93:7. Latentwärmespeichermaterialien sind definitionsgemäß Substanzen, die in dem Temperaturbereich, in welchem eine Wärmeübertragung vorgenommen werden soll, einen Phasenübergang aufweisen. Vorzugsweise weisen die Latentwärmespeichermaterialien einen fest/flüssig Phasenübergang im Temperaturbereich von 0 bis 70°C insbesondere von 10 bis 50°C und ganz besonders bevorzugt von 18 bis 35°C auf, abhängig von der gewünschten Anwendung. In der Regel handelt es sich bei dem Latentwärmespeichermaterial um eine organische, bevorzugt lipophile Substanz.

Als geeignete Substanzen sind beispielhaft zu nennen:
- aliphatische Kohlenwasserstoffverbindungen wie gesättigte oder ungesättigte C₁₅-C₄₀-Kohlenwasserstoffe, die verzweigt oder bevorzugt linear sind, z.B. n-Pentadecan (Schmelzpunkt bei 10°C), n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan, besonders bevorzugt n-Hexadecan mit einem Schmelzpunkt bei 18°C, n-Octadecan mit einem Schmelzpunkt bei 28°C , n-Eicosan mit einem Schmelzpunkt bei 35°C
- aromatische Kohlenwasserstoffverbindungen
- gesättigte oder ungesättigte C₆-C₄₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole sowie die sogenannten Oxoalkohole, die man durch Hydroformylierung von α-Olefinen und weiteren Umsetzungen erhält;
- C₆-C₄₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinylether wachs, Ethylenvinylacetatwachs oder Hartwachse nach Fischer-Tropsch-Verfahren;
- halogenierte Kohlenwasserstoffe.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, den kapselkern-bildenden Substanzen in ihnen lösliche Verbindungen zuzugeben, um so die zum Teil bei den unpolaren Substanzen auftretende Gefrierpunktserniedrigung zu verhindern. Vorteilhaft verwendet man, wie in der US-A 5 456 852 beschrieben, Verbindungen mit einem 20 bis 120 K höheren Schmelzpunkt als die eigentliche Kernsubstanz. Geeignete Verbindungen sind die oben als lipophile Substanzen erwähnten Fettsäuren, Fettalkohole, Fettamide sowie aliphatische Kohlenwasserstoffverbindungen. Sie werden in Mengen von 0,1 bis 10 Gew.-% bezogen auf den Kapselkern zugesetzt.

Das Latentwärmespeichermaterial wird je nach Temperaturbereich, in dem die Wärmespeicherung gewünscht sind, gewählt.

Als Polymer für die Kapselwand können prinzipiell die für die Mikrokapseln für Durchschreibepapiere bekannten formaldehydfreien Materialien verwendet werden. So ist es beispielsweise möglich, die Latentwärmespeichermaterialien nach den in der GB-A 870476, US 2,800,457, US 3,041,289 beschriebenen Verfahren in Gelatine mit anderen Polymeren zu verkapseln.

Bevorzugte Wandmaterialien, da sehr alterungsstabil, sind duroplastische Polymere. Unter duroplastisch sind dabei Wandmaterialien zu verstehen, die aufgrund des hohen Vernetzungsgrades nicht erweichen, sondern sich bei hohen Temperaturen zersetzen. Geeignete duroplastische Wandmaterialien sind beispielsweise hochvernetzte Polyurethane sowie hochvernetzte Methacrylsäureesterpolymere.

In den von den Durchschreibepapieren her bekannten Verfahren werden die Harze als Prepolymere eingesetzt. Das Prepolymer ist noch in der wässrigen Phase löslich und wandert im Verlauf der Polykondensation an die Grenzfläche und umschließt die Öltröpfchen. Verfahren zu Mikroverkapselung mit Formaldehydharzen sind allgemein bekannt und beispielsweise in der EP-A 0 562 344 und EP-A 0 974 394 beschrieben.

Kapselwände aus Polyurethanen sind ebenfalls von den Durchschreibepapieren her bekannt. Die Kapselwände entstehen durch Umsetzung von NH₂-Gruppen bzw. OH-Gruppen tragenden Reaktanden mit Di- und/oder Polyisocyanaten. Geeignete Isocyanate sind beispielsweise Ethylendiisocyanat, 1,4-Tetramethylendiisocyanat, 1,6-Hexamethylendiisocyanat und 2,4- und 2,6-Toluylendiisocyanat. Ferner seien Polyisocyanate wie Derivate mit Biuretstruktur, Polyuretonimine und Isocyanurate erwähnt. Als Reaktanden kommen in Frage: Hydrazin, Guanidin und dessen Salze, Hydroxylamin, Di- und Polyamine und Aminoalkohole. Solche Grenzflächenpolyadditionsverfahren sind beispielsweise aus der US 4,021,595, EP-A 0 392 876 und EP-A 0 535 384 bekannt.

Bevorzugt werden Mikrokapseln, deren Kapselwand ein hochvernetztes Methacrylsäureesterpolymer ist. Der Vernetzungsgrad wird dabei mit einem Vernetzeranteil größer oder gleich 10 Gew.-% bezogen auf das gesamte Polymer erzielt.

In den bevorzugten Mikrokapseln sind die Wand-bildenden Polymere aus 10 bis 100 Gew.-%, vorzugsweise 30 bis 95 Gew.-% eines oder mehrerer C₁-C₂₄-Alkylester der Acryl- und/oder Methacrylsäure als Monomere I aufgebaut. Außerdem können die Polymere bis zu 80 Gew.-%, vorzugsweise 5 bis 60 Gew.-%, insbesondere 10 bis 50 Gew.-%, eines bi- oder polyfunktionellen Monomers als Monomere II, welches in Wasser nicht löslich oder schwer löslich ist, einpolymerisiert enthalten. Daneben können die Polymere bis zu 90 Gew.-%, vorzugsweise bis zu 50 Gew.-%, insbesondere bis zu 30 Gew.-% sonstige Monomere III einpolymerisiert enthalten.

Als Monomere I eignen sich C₁-C₂₄-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen. Unter bi- oder polyfunktionellen Monomeren versteht man Verbindungen, die wenigstens 2 nichtkonjugierte ethylenische Doppelbindungen haben. Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere in Betracht, bevorzugt sind Monomere IIIa wie Vinylacetat, Vinylpropionat und Vinylpyridin.

Besonders bevorzugt sind die wasserlöslichen Monomere IIIb, z.B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Nach einer weiteren bevorzugten Ausführungsform sind die Wand-bildenden Polymere aus 30 bis 90 Gew.-% Methacrylsäure, 10 bis 70 Gew.-% eines Alkylesters der (Meth)acrylsäure, bevorzugt Methylmethacrylat, tert-Butylmethacrylat, Phenylmethacrylat und Cyclohexylmethacrylat, und 0 bis 40 Gew.-% weitere ethylenisch ungesättigter Monomeren gebildet. Diese weiteren ethylenisch ungesättigten Monomere können die für diese Ausführungsform bisher nicht erwähnten Monomere I, II oder III sein. Da sie in der Regel keinen wesentlichen Einfluss auf die gebildeten Mikrokapseln dieser Ausführungsform haben, ist ihr Anteil bevorzugt < 20 Gew.-% insbesondere <10 Gew.-%. Derartige Mikrokapseln sowie ihre Herstellung werden in der EP-A 1 251 954 beschrieben, auf die ausdrücklich Bezug genommen wird.

Die zur erfindungsgemäßen Verwendung geeigneten Mikrokapseln lassen sich durch eine sogenannte in-situ-Polymerisation herstellen.

Die bevorzugten Mikrokapseln sowie ihre Herstellung sind aus der EP-A0457 154, DE-A-10139 171, DE-A 102 30 581 und EP-A 1 321 182 bekannt, auf die ausdrücklich verwiesen wird. So stellt man die Mikrokapseln in der Weise her, dass man aus den Monomeren, einem Radikalstarter, einem Schutzkolloid und der einzukapselnden lipophilen Substanz eine stabile ÖI-in-Wasser-Emulsion herstellt, in der sie als disperse Phase vorliegen. Anschließend löst man die Polymerisation der Monomeren durch Erwärmung aus und steuert sie durch weitere Temperaturerhöhung, wobei die entstehenden Polymere die Kapselwand bilden, welche die lipophile Substanz umschließt.

In der Regel führt man die Polymerisation bei 20 bis 100°C, vorzugsweise bei 40 bis 80° C durch. Natürlich sollte die Dispersions- und Polymerisationstemperatur oberhalb der Schmelztemperatur der lipophilen Substanzen liegen.

Nach Erreichen der Endtemperatur setzt man die Polymerisation zweckmäßigerweise noch etwa für eine Zeit von bis zu 2 Stunden fort, um Restmonomergehalte abzusenken. Im Anschluss an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomere und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 99/24525 beschrieben, vorteilhaft durch redoxinitiierte Polymerisation, wie in der DE-A-4 435 423, DE-A-4419518 und DE-A-4435422 beschrieben.

Man kann auf diese Weise Mikrokapseln mit einer mittleren Teilchengröße im Bereich von 0,5 bis 100 µm herstellen, wobei die Teilchengröße in an sich bekannter Weise über die Scherkraft, die Rührgeschwindigkeit, das Schutzkolloid und seine Konzentration eingestellt werden kann.

Bevorzugte Schutzkolloide sind wasserlösliche Polymere, da diese die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen zwischen 1 und 30 µm, vorzugsweise 2 und 10 µm, ausbilden.

In der Regel werden die Mikrokapseln in Gegenwart wenigstens eines organischen Schutzkolloids hergestellt, das anionisch oder neutral sein kann. Auch können anionische und nichtionische Schutzkolloide zusammen eingesetzt werden. Bevorzugt verwendet man anorganische Schutzkolloide gegebenenfalls in Mischung mit organischen Schutzkolloiden oder nichtionische Schutzkolloide.

Organische neutrale Schutzkolloide sind Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Natriumalginat, Kasein, Polyethylenglykole, bevorzugt Polyvinylalkohol und partiell hydrolysierte Polyvinylacetate sowie Methylhydroxypropylcellulose.

Als anionische Schutzkolloide eignen sich Polymethacrylsäure, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure.

Bevorzugte anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Die anionischen und nichtionischen Schutzkolloide werden in der Regel in Mengen von 0,1 bis 10 Gew.-% eingesetzt, bezogen auf die Wasserphase der Emulsion.

Bevorzugt werden anorganische Schutzkolloide, sogenannte Pickering-Systeme, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind.

Die Wirkweise und ihr Einsatz ist in der EP-A-1 029 018 sowie der EP-A-1 321 182 beschrieben, auf deren Inhalte ausdrücklich Bezug genommen wird.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt, wie in der EP-A-1 029 018, sowie der EP-A-1 321182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Die kolloidalen Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der Öl-in-Wasser Emulsion mit einer Säure auf pH 2 bis 7 eingestellt wird.

Die anorganischen Schutzkolloide werden in der Regel in Mengen von 0,5 bis 15 Gew.-%, bezogen auf die Wasserphase, eingesetzt.

Im allgemeinen werden die organischen neutralen Schutzkolloide in Mengen von 0,1 bis 15 Gew.-%, vorzugsweise von 0,5 bis 10 Gew.-% eingesetzt, bezogen auf die Wasserphase.

Vorzugsweise wählt man die Dispergierbedingungen zur Herstellung der stabilen Ölin-Wasser Emulsion in an sich bekannter Weise so, dass die Öltröpfchen die Größe der gewünschten Mikrokapseln haben.

Die durch die Polymerisation erhaltenen Mikrokapseldispersionen ergeben bei Sprühtrocknung ein gut rieselfähiges Kapselpulver. Die Sprühtrocknung der Mikrokapseldispersion kann in üblicher Weise erfolgen. Im allgemeinen wird so vorgegangen, dass die Eingangstemperatur des Warmluftstroms im Bereich von 100 bis 200°C, vorzugsweise 120 bis 160°C, und die Ausgangstemperatur des Warmluftstroms im Bereich von 30 bis 90°C, vorzugsweise 60 bis 80°C liegt. Das Versprühen der wässrigen Polymerisatdispersion im Warmluftstrom kann beispielsweise mittels Ein- oder Mehrstoffdüsen oder über eine rotierende Scheibe erfolgen. Die Abscheidung des Polymerisatpulvers erfolgt normalerweise unter Verwendung von Zyklonen oder Filterabscheidern. Die versprühte wässrige Polymerisatdispersion und der Warmluftstrom werden vorzugsweise parallel geführt.

Gegebenenfalls setzt man zur Sprühtrocknung Sprühhilfsmittel zu, um die Sprühtrocknung zu erleichtern, oder bestimmte Pulvereigenschaften einzustellen, z.B. Staubarmut, Rieselfähigkeit oder verbesserte Redispergierbarkeit. Dem Fachmann sind eine Vielzahl von Sprühhilfsmitteln geläufig. Beispiele hierfür finden sich in DE-A 19629525, DE-A 19629526, DE-A 2214410, DE-A 2445813, EP-A 407889 oder EP-A 784449. Vorteilhafte Sprühhilfsmittel sind beispielsweise wasserlösliche Polymere vom Typ Polyvinylalkohol oder teilhydrolysierte Polyvinylacetate, Cellulosederivate wie Hydroxyethylcellulose, Carboxymethylcellulose, Methylcellulose, Methylhydroxyethylcellulose und Methylhydroxypropylcellulose, Polyvinylpyrrolidon, Copolymere des Vinylpyrrolidons, Gelatine, bevorzugt Polyvinylalkohol und partiell hydrolysierte Polyvinylacetate sowie Methylhydroxypropylcellulose.

Das erfindungsgemäße Verfahren kann in gängigen Apparaturen oder Maschinen durchgeführt werden. So kann man beispielsweise textiles Substrat mit wässriger Formulierung tränken. Weiterhin ist es möglich, wässrige Formulierung aufzusprühen, aufzurakeln oder mit Hilfe eines Luftrakels aufzubringen.

Bevorzugte textile Substrate (Textilien) sind Foulards. Geeignete Foulards enthalten als wesentliches Element zwei aufeinandergepresste Rollen, durch die das Textil geführt wird. Oberhalb der Rollen ist die wässrige Formulierung eingefüllt und benetzt das Textil. Durch den Druck wird das Textil abgequetscht und ein konstanter Auftrag gewährleistet.

In einer weiteren Ausführungsform wird das Textil über eine Umlenkrolle durch einen Trog mit der wässrigen Formulierung geführt. Anschließend wird über ein Walzenpaar, welches oberhalb der wässrigen Formulierung angebracht ist, überschüssige wässrige Formulierung abgepresst und so ein konstanter Auftrag gewährleistet.

In einer Ausführungsform der vorliegenden Erfindung kann man nach dem Behandeln von textilem Substrat mit wässriger Formulierung thermisch behandeln, und zwar in einem oder mehreren Behandlungsschritten. Beispielsweise kann man thermisch trocknen und/oder thermisch fixieren, bevorzugt trocknet man bei Temperaturen von 70 bis 120°C über einen Zeitraum von 30 Sekunden bis 30 Minuten und/oder fixiert, gegebenenfalls anschließend an das Trocknen, bei Temperaturen von 140°C bis 200°C über einen Zeitraum von 30 Sekunden bis 15 Minuten.

Nach Durchführung des erfindungsgemäßen Verfahrens erhält man beschichtete, bevorzugt bedruckte textile Substrate mit insgesamt vorteilhaften Eigenschaften, insbesondere geringer Vergrauungstendenz, und die keinen Formaldehyd emittieren. Nach dem erfindungsgemäßen Verfahren erhältliche textile Substrate sind ebenfalls Gegenstand der vorliegenden Erfindung und werden auch als erfindungsgemäße textile Substrate bezeichnet. Erfindungsgemäße textile Substrate enthalten Reaktionsprodukte von polymerem Carbodiimid (C) mit eingesetztem Diol (D), Triol (D) bzw. Polyol (D).

Ein weiterer Gegenstand der vorliegenden Erfindung sind wässrige Formulierungen, enthaltend
(A) mindestens ein Bindemittel, das Ethylen, (Meth)acrylsäure und gegebenenfalls ein oder mehrere weitere Comonomere einpolymerisiert enthält,
(B) mindestens ein Umsetzungsprodukt von mindestens einem Carbodiimid (C) mit mindestens einem Diol, Triol oder Polyol (D), oder
(C) mindestens ein polymeres Carbodiimid,
(D) gegebenenfalls mindestens ein Diol, Triol oder Polyol,
(E) gegebenenfalls mindestens ein Pigment,
(F) gegebenenfalls mindestens einen Wirkstoff,
(G) gegebenenfalls mindestens einen Hilfsstoff,
(H) gegebenenfalls mindestens ein Mikrokapselmaterial.

Bei erfindungsgemäßen wässrigen Formulierungen kann es sich beispielsweise um Färbeflotten, Beschichtungsflotten oder Ausrüstungsflotten und bevorzugt um Druckpasten handeln.

Bindemittel (A), Umsetzungsprodukte (B), polymere Carbodiimide (C), Diole (D), Triole (D) bzw. Polyole (D) und Pigmente (E) sind vorstehend beschrieben.

Wünscht man solche erfindungsgemäßen wässrigen Formulierungen einzusetzen, die ein oder mehrere Pigmente (E) enthalten, so ist es bevorzugt, dass Pigment (E) in Form einer sogenannten Pigmentzubereitung eingesetzt wird. Pigmentzubereitungen im Sinne der vorliegenden Erfindung kann man herstellten, indem man ein oder mehrere Pigmente (E) mit einem oder mehreren Dispergierhilfsmittel intensiv vermischt. Als Dispergierhilfsmittel sind beispielsweise Tenside, insbesondere nichtionische Tenside wie beispielsweise mehrfach ethoxylierte C₁₀-C₃₀-Fettalkohole oder mehrfach ethoxylierte C₁₁-C₃₁-Oxoalkohole geeignet.

Unter Hilfsstoffen (G) sind beispielsweise Verdicker (Verdickungsmittel), Lösemittel, Entschäumer, Netzmittel, Griffverbesserer, Dispergiermittel, Emulgatoren, Wasserrückhaltemittel, Antiabsetzmittel und/oder Biozide zu verstehen. Bevorzugte Hilfsstoffe sind Verdicker und Entschäumer.

Erfindungsgemäße wässrige Formulierungen können beispielsweise einen oder mehrere natürliche Verdicker oder vorzugsweise einen oder mehrere synthetische Verdicker enthalten. Natürliche Verdicker sind solche Verdicker, die Naturprodukte sind oder durch Aufarbeitung wie beispielsweise Reinigungsoperationen, insbesondere Extraktion von Naturprodukten erhalten werden können. Beispiele für anorganische natürliche Verdicker sind Schichtsilikate wie beispielsweise Bentonit. Beispiele für organische natürliche Verdicker sind vorzugsweise Proteine wie beispielsweise Casein oder bevorzugt Polysaccharide. Besonders bevorzugte natürliche Verdicker sind gewählt aus Agar-Agar, Carrageen, Gummi arabicum, Alginaten wie beispielsweise Natriumalginat, Kaliumalginat, Ammoniumalginat, Calciumalginat und Propylengycolalginat, Pektinen, Polyosen, Johannisbrotbaum-Kernmehl (Carubin) und Dextrinen.

Bevorzugt ist der Einsatz von synthetischen Verdickern, die gewählt sind aus von im Allgemeinen flüssigen Lösungen von synthetischen Polymeren, insbesondere Acrylaten, in beispielsweise Weißöl oder als wässrige Lösungen. Als Verdicker eingesetzte synthetische Polymere enthalten Säuregruppen, die vollständig oder zu einem gewissen Prozentsatz mit Ammoniak neutralisiert werden. Beim Fixierprozess wird Ammoniak freigesetzt, wodurch der pH-Wert gesenkt wird und die eigentliche Fixierung beginnt. Das für die Fixierung notwendige Absenken des pH-Wertes kann alternativ durch Zusatz von nichtflüchtigen Säuren wie z.B. Zitronensäure, Bernsteinsäure, Glutarsäure oder Äpfelsäure erfolgen. Ebenso sind Di-Ammoniumphosphat und Natrium-di-Ammoniumphosphat zum Absenken des pH-Werts geeignet.

Ganz besonders bevorzugte synthetische Verdicker sind gewählt aus Copolymeren von 85 bis 95 Gew.-% Acrylsäure, 4 bis 14 Gew.-% Acrylamid und 0,01 bis maximal 1 Gew.-% des (Meth)acrylamidderivats der Formel IV 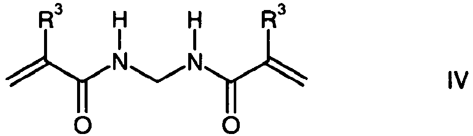 oder 0,01 bis maximal 1 Gew.-% bis(Meth)acrylat von Ethylenglykol bzw. Propylenglykol
mit Molekulargewichten M_{w} im Bereich von 100.000 bis 2.000.000 g/mol, in denen die Reste R³ verschieden oder gleich sein und Methyl oder Wasserstoff bedeuten können.

Erfindungsgemäße wässrige Formulierungen können ein oder mehrere Lösungsmittel enthalten, darunter sind im Rahmen der vorliegenden Erfindung organische Lösungsmittel wie beispielsweise Methanol, Ethanol oder Isopropanol zu verstehen.

Erfindungsgemäße wässrige Formulierungen können einen oder mehrere Entschäumer enthalten. Geeignete Entschäumer sind beispielsweise silikonhaltige Entschäumer wie beispielsweise solche der Formel HO-(CH₂)₃-Si(CH₃)[OSi(CH₃)₃]₂ und HO-(CH₂)₃-Si(CH₃)[OSi(CH₃)₃][OSi(CH₃)₂OSi(CH₃)₃], nicht alkoxyliert oder mit bis zu 20 Äquivalenten Alkylenoxid und insbesondere Ethylenoxid alkoxyliert. Auch Silikon-freie Entschäumer sind geeignet wie beispielsweise mehrfach alkoxylierte Alkohole, z.B. Fettalkoholalkoxylate, bevorzugt 2 bis 50-fach ethoxylierte vorzugsweise unverzweigte C₁₀-C₂₀-Alkanole, unverzweigte C₁₀-C₂₀-Alkanole und 2-Ethylhexan-1-ol. Weitere geeignete Entschäumer sind Fettsäure-C₈-C₂₀-alkylester, bevorzugt Stearinsäure-C₁₀-C₂₀-alkylester, bei denen C₈-C₂₀-Alkyl, bevorzugt C₁₀-C₂₉-Alkyl unverzweigt oder verzweigt sein kann. Weitere geeignete Entschäumer sind Phosphorsäuretrialkylester wie beispielsweise Triisobutylphosphat.

Erfindungsgemäße wässrige Formulierungen können beispielsweise ein oder mehrere Netzmittel enthalten, bevorzugt schaumarme Netzmittel, da Schaumbildung die Qualität der Behandlung durch Bildung von Unegalitäten beeinträchtigen kann. Als Netzmittel werden beispielsweise eingesetzt: Ethoxylierungs- und/oder Propoxylierungsprodukte von Fettalkoholen oder Propylenoxid-Ethylenoxid-Blockcopolymere, ethoxylierte oder propoxylierte Fett- oder Oxoalkohole, weiterhin Ethoxylate von Ölsäure oder Alkylphenolen, Alkylphenolethersulfate, Alkylpolyglycoside, Alkylphosphonate, Alkylphenylphosphonate, Alkylphosphate, oder Alkylphenylphosphate.

Erfindungsgemäße wässrige Formulierungen können weiterhin einen oder mehrere Griffverbesserer enthalten, die üblicherweise aus Silikonen, insbesondere Polydimethylsiloxanen, und Fettsäureestern ausgewählt werden.

Erfindungsgemäße wässrige Formulierungen können ein oder mehrere Dispergiermittel enthalten. Beispiele für geeignete Dispergiermittel sind aryl- oder alkylsubstituierte Polyglykolether, weiterhin Substanzen, die in US 4,218,218 beschrieben sind, und Homologe mit y (aus den Formeln aus US 4,218,218) im Bereich von 10 bis 37. Erfindungsgemäße wässrige Formulierungen können einen oder mehrere Emulgatoren enthalten. Geeignete Emulgatoren können kationisch, anionisch oder bevorzugt nichtionisch sein. Beispiele für nicht-ionische Emulgatoren sind beispielsweise ein- oder mehrfach alkoxylierte, bevorzugt propoxylierte und insbesondere mehrfach, z. B. 3 bis 100-fach ethoxylierte Fettalkohole, Oxoalkohole und insbesondere Arylpolyglykolether, beispielsweise der Formel V a bis V c:

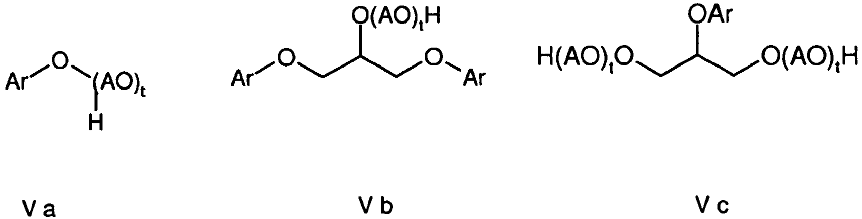

Dabei sind die Variablen wie folgt definiert:
- Ar:: verschieden oder gegebenenfalls gleich, C₆-C₁₄-Aryl, beispielsweise Phenyl, Naphthyl oder Phenanthryl, unsubstituiert oder ein oder mehrfach substituiert, insbesondere mit C₁-C₄-Alkyl, verzweigt oder unverzweigt, beispielsweise Methyl, Ethyl, n-Propyl, Iso-Propyl, n-Butyl, Iso-Butyl, oder mit Alkylaryl, beispielsweise Styryl; bevorzugte substituierte Phenylreste sind jeweils in 2,6-Position oder in 2,4,6-Position mit C₁-C₄-Alkyl substituiert.
- t: verschieden oder vorzugsweise gleich und gewählt aus Zahlen im Bereich von 1 bis 100, bevorzugt 2 bis 50 und besonders bevorzugt 3 bis 20.

Erfindungsgemäße wässrige Formulierungen können ein oder mehrere Wasserrückhaltemittel enthalten. Beispiel für ein geeignetes Wasserrückhaltemittel ist Harnstoff.

Erfindungsgemäße wässrige Formulierungen können ein oder mehrere Biozide enthalten. Geeignete Biozide sind beispielsweise als Proxel-Marken im Handel befindlich. Beispielhaft seien genannt: 1,2-Benzisothiazolin-3-on ("BIT") (kommerziell erhältlich als Proxel®-Marken der Fa. Avecia Lim.) und dessen Alkalimetallsalze; andere geeignete Biozide sind 2-Methyl-2H-isothiazol-3 on ("MIT") und 5-Chlor-2-methyl-2H-isothiazol-3-on ("CIT").

Beispiele für geeignete Antiabsetzmittel sind Silikate und Kieselgele, beispielsweise mit einem mittleren Partikeldurchmesser (insbesondere Sekundärpartikeldurchmesser) im Bereich von 10 bis 500 nm, insbesondere pyrogene Kieselgele. Geeignete pyrogene Kieselgele sind beispielsweise als Aerosil®-Marken im Handel.

Erfindungsgemäße wässrige Formulierungen können als Hilfsstoff (G) insbesondere dann, wenn man sie zum Beschichten verwenden möchte, ein oder mehrere Aufschäummittel enthalten, beispielsweise Ammoniumsalze von Fettsäuren, bevorzugt Ammoniumstearat.

Dabei ist es möglich, dass ein Hilfsstoff (G) mehrere Funktionen übernimmt. Beispielsweise können mehrfach ethoxylierte Fettalkohole wie beispielsweise n-C₁₈H₃₇O(CH₂CH₂O)₁₅H gleichzeitig als Netzmittel, Emulgator und schaumarmes Dispergiermittel wirken.

In einer Ausführungsform der vorliegenden Erfindung enthalten erfindungsgemäße wässrige Formulierungen 1 bis 15 Gew.-% Gew.-%, bevorzugt 1,5 bis 10 Gew.-%, besonders bevorzugt 2 bis 5 Gew.-% Bindemittel (A). Diese Ausführungsform ist bevorzugt, wenn man erfindungsgemäße wässrige Formulierung für ein Verfahren zum Bedrucken von textilen Substraten ausüben möchte.

In einer Ausführungsform der vorliegenden Erfindung enthalten erfindungsgemäße wässrige Formulierungen 10 bis 25 Gew.-%, bevorzugt 12 bis 20 Gew.-% Bindemittel (A). Diese Ausführungsform ist bevorzugt, wenn man erfindungsgemäße wässrige Formulierung für ein Verfahren zum Beschichten von textilen Substraten ausüben möchte.

In einer anderen Ausführungsform der vorliegenden Erfindung enthalten erfindungsgemäße wässrige Formulierungen 0,4 bis 15 Gew.-%, bevorzugt bis 5 Gew.-% Bindemittel (A). Diese Ausführungsform ist bevorzugt, wenn man erfindungsgemäße wässrige Formulierung für ein Verfahren zum Färben von textilen Substraten ausüben möchte.

In einer Ausführungsform der vorliegenden Erfindung enthalten erfindungsgemäße wässrige Formulierungen weiterhin
0,1 bis 15 Gew.-%, bevorzugt 0,1 bis 6 Gew.-% Umsetzungsprodukt (B) oder
0,1 bis 15 Gew.-%, bevorzugt 0,2 bis 6 Gew.-% polymeres Carbodiimid (C),
null bis 3 Gew.-%, bevorzugt 0,1 bis 2,5 Gew.-% Diol (D), Triol (D) bzw. Polyol (D),
null bis 10 Gew.-%, bevorzugt 0,05 bis 3 Gew.-% Pigment (E),
null bis insgesamt bis zu 10 Gew.-%, bevorzugt bis zu 6 Gew.-% Hilfsstoff(e) (G).
Dabei sind Angaben in Gew.-% jeweils auf gesamte erfindungsgemäße wässrige Formulierung bezogen. Mengenangaben für Bindemittel (A) oder andere Bestandteile von erfindungsgemäßer wässriger Formulierung beziehen sich jeweils auf den Feststoffgehalt des Bindemittels (A) etc.

Erfindungsgemäße wässrige Formulierungen enthalten weiterhin Wasser.

In einer Ausführungsform der vorliegenden Erfindung haben erfindungsgemäße wässrige Formulierungen einen Wassergehalt im Bereich von 60 bis 95 Gew.-%, bevorzugt 80 bis 95 Gew.-%. Diese Ausführungsform ist bevorzugt, wenn man erfindungsgemäße wässrige Formulierung als Druckpaste für ein Verfahren zum Färben von textilen Substraten ausüben möchte.

In einer Ausführungsform der vorliegenden Erfindung haben erfindungsgemäße wässrige Formulierungen einen Wassergehalt im Bereich von 20 bis 80 Gew.-%, bevorzugt 30 bis 70 Gew.-%. Diese Ausführungsform ist bevorzugt, wenn man erfindungsgemäße wässrige Formulierung für ein Verfahren zum Beschichten von textilen Substraten ausüben möchte.

In einer Ausführungsform der vorliegenden Erfindung haben erfindungsgemäße wässrige Formulierungen einen Wassergehalt im Bereich von 90 bis 98 Gew.-%. Diese Ausführungsform ist bevorzugt, wenn man erfindungsgemäße wässrige Formulierung als Flotte für ein Verfahren zum Färben von textilen Substraten ausüben möchte.

In einer Ausführungsform der vorliegenden Erfindung hat erfindungsgemäße wässrige Formulierung bei 23°C eine dynamische Viskosität im Bereich von 10 bis 100 dPa·s, bevorzugt 20 bis 30 da·s, bestimmt beispielsweise durch Rotationsviskosimetrie, beispielsweise mit einem Haake-Viskosimeter. Der vorstehend genannte Viskositätsbereich gilt insbesondere dann, wenn es sich bei erfindungsgemäßer wässriger Formulierung um eine Druckpaste handelt.

In einer anderen Ausführungsform der vorliegenden Erfindung handelt es sich bei erfindungsgemäßer wässriger Formulierung um eine Färbeflotte.

Erfindungsgemäße Färbeflotten enthalten mindestens ein Bindemittel (A), mindesatens ein Umsetzungsprodukt (B) oder mindestens ein polymeres Carbodiimid (C), vorzugsweise mindestens ein Diol (D), Triol (D) oder Polyol (D), vorzugsweise mindestens ein Pigment (E) und gegebenenfalls einen oder mehrere Hilfsstoffe (G). Dabei kann man Hilfsstoff(e) (G) unter den vorstehend genannten Hilfsstoffen (G) wählen. Vorzugsweise enthält erfindungsgemäße Färbeflotte jedoch keinen Verdicker.

Trockene textile Gewebe, Garne, Filamente, Gewirke oder Vliese, wie sie in der kontinuierlichen Pigmentfärbung eingesetzt werden, enthalten eine große Menge von Luft. Zur Durchführung des erfindungsgemäßen Pigmentfärbeverfahrens ist daher der Einsatz von Entlüftern vorteilhaft. Diese basieren beispielsweise auf Polyethersiloxan-Copolymeren. Sie können in Mengen von 0,01 bis 2 g/l in erfindungsgemäßer Färbeflotte enthalten sein.

Weiterhin können erfindungsgemäße Färbeflotten Antimigrationsmittel enthalten. Geeignete Antimigrationsmittel sind beispielsweise Blockcopolymerisate von Ethylenoxid und Propylenoxid mit Molekulargewichten Mₙ im Bereich von 500 bis 5000 g/mol, bevorzugt 800 bis 2000 g/mol.

Weiterhin kann man den erfindungsgemäßen Färbeflotten als Zusatz einen oder mehrere Griffverbesserer zusetzen. Hierbei handelt es sich vorzugsweise um Polysiloxane oder um Wachse. Polysiloxane haben hierbei den Vorteil der Permanenz, während die Wachse langsam während des Gebrauchs ausgewaschen werden.

Erfindungsgemäße Färbeflotten weisen üblicherweise einen schwach sauren pH-Wert auf, vorzugsweise im Bereich von 4 bis 6,5, oder einen schwach alkalischen pH-Wert, beispielsweise im Bereich von 7,1 bis 9,5, eingestellt beispielsweise mit Ammoniak. Die Oberflächenspannungen von erfindungsgemäßen Färbeflotten sind so einzustellen, dass ein Benetzen der Ware möglich ist. Geeignet sind beispielsweise Oberflächenspannungen von kleiner 50 mN/m bei 23°C.

In einer Ausführungsform der vorliegenden Erfindung enthält eine erfindungsgemäße Färbeflotte pro Liter neben Bindemittel (A), Umsetzungsprodukt (B) oder polymeres Carbodiimid (C) und gegebenenfalls Diol (D), Triol (D) bzw. Polyol (D)
0 bis 100 g, bevorzugt 0,1 bis 10 g Netzmittel,
0 bis 100 g, bevorzugt 0,1 bis 10 g Entschäumer,
0 bis 100 g, bevorzugt 1 bis 50 g Antimigrationsmittel,
0,5 bis 25 g, bevorzugt 1 bis 12 g Pigment (E).

In einer Ausführungsform der vorliegenden Erfindung hat erfindungsgemäße wässrige Formulierung bei 23°C eine dynamische Viskosität im Bereich von unter 100 mPa·s, gemessen bei 20°C. Der vorstehend genannte Viskositätsgrenzwert gilt insbesondere dann, wenn es sich bei erfindungsgemäßer wässriger Formulierung um eine Färbeflotte handelt.

Erfindungsgemäße wässrige Formulierungen sind zur Durchführung des erfindungsgemäßen Verfahrens besonders geeignet. Außerdem zeigen sie eine besonders gute Lagerstabilität und Scherstabilität.

Ein weiterer Gegenstand der vorliegenden Erfindung ist ein Verfahren zur Herstellung von erfindungsgemäßen wässrigen Formulierungen. Das erfindungsgemäße Verfahren zur Herstellung von erfindungsgemäßen Formulierungen gelingt durch Vermischen, insbesondere Verrühren von
(A) mindestens einem Bindemittel, das Ethylen, (Meth)acrylsäure und gegebenenfalls ein oder mehrere weitere Comonomere einpolymerisiert enthält,
(B) mindestens einem Umsetzungsprodukt von mindestens einem polymeren Carbodiimid (C) mit mindestens einem Diol, Triol oder Polyol (D), oder
(C) mindestens einem polymeren Carbodiimid und
(D) gegebenenfalls mindestens einem Diol, Triol oder Polyol,
(E) gegebenenfalls mindestens einem Pigment,
(F) gegebenenfalls mindestens einen Wirkstoff,
(G) gegebenenfalls mindestens einem Hilfsstoff,
(H) gegebenenfalls mindestens ein Mikrokapselmaterial,
und gegebenenfalls Auffüllen mit Wasser.

Die Reihenfolge der Zugabe der Bestandteile (A) bis (H) kann man frei wählen. Wünscht man als Hilfsstoff (G) einen oder mehrere Verdicker einzusetzen, so ist es bevorzugt, den oder die Verdicker als letztes oder unmittelbar vor dem Auffüllen mit Wasser zuzugeben.

Das erfindungsgemäße Verfahren zur Herstellung von erfindungsgemäßen Formulierungen kann man in beliebigen Gefäßen durchführen. Wünscht man als Hilfsstoff (G) einen oder mehrere Verdicker einzusetzen, so ist es bevorzugt, mit Hilfe eines Schnellrührers, beispielsweise eines Ultra-Thurrax, zu vermischen.

Die Erfindung wird durch Arbeitsbeispiele erläutert.

### Vorbemerkung:

Der Gehalt an freiem (abgespaltenem) Formaldehyd wurde jeweils nach Law 112 und nach AATCC 112 Methoden (EN ISO 14 184, Teile 1 und 2), DIN EN ISO 14184-1 und DIN EN ISO 14184-2 bestimmt.

### I. Herstellung von erfindungsgemäßen wässrigen Formulierungen (Druckpasten)

Es wurden die folgenden Ingredienzien eingesetzt:
Bindemittel (A.1): Wässrige Dispersion (20 Gew.-% Feststoffgehalt) eines statistischen Copolymers aus 20 Gew.-% Acrylsäure, 80 Gew.-% Ethylen, M_{w}: 20.000 g/mol, neutralisiert mit N,N-Dimethylethanolamin, pH-Wert 9.

### Umsetzungsprodukte (B.1-1) und (B.1-2)

Die Herstellung von Umsetzungsprodukten (B) erfolgte unter Schutzgasatmosphäre (vorgetrockneter Stickstoff).

Zur Herstellung von Umsetzungsprodukt (B.1-1) ging man wie folgt vor:
Man trocknete 500 g Carbodiimid (C.1), einem Carbodiimid auf Basis von *meta-TMXDI* mit einem titrimetrisch ermittelten NCO-Gehalt von 6,7 Gew.-% (entsprechend etwa 4,2 Carbodiimidgruppen/Molekül), 24 Stunden bei 60°C in einem Wärmeschrank. Anschließend legte man das so getrocknete Carbodiimid (C.1) in einem 2-I-Vierhalskolben mit Trockenrohr, Rührer, Thermometer und Gaseinleitungsrohr vor, erwärmte auf 60°C und gab unter Rühren 500 g Polyol (D.2) (Polyethylenglykol mit einem mittleren Molekulargewicht Mₙ von 600 g/mol) zu. Danach wurde auf 90°C erwärmt. Die so erhältliche Reaktionsmischung war zunächst milchig weiß und wurde dann transparent. Man kühlte auf 80°C ab und rührte 90 Minuten bei 80°C. Dann kühlte man ab und erhielt Umsetzungsprodukt (B.1-1), welches bei Zimmertemperatur flüssig war, wasserlöslich war und keine Isocyanatgruppen mehr enthielt.

Zur Herstellung von Umsetzungsprodukt (B.1-2) setzte man 450 g Carbodiimid (C.1) und 550 g Polyol (D.2) analog zur vorstehend beschriebenen Vorgehensweise miteinander um. Man erhielt Umsetzungsprodukt (B.1-2), das ebenfalls bei Zimmertemperatur flüssig war, wasserlöslich war und keine Isocyanatgruppen mehr enthielt.

Zur Herstellung von Umsetzungsprodukt (B.1-3) setzte man 550 g Carbodiimid (C.1) und 450 g Polyol (D.2) analog zur vorstehend beschriebenen Vorgehensweise miteinander um. Man erhielt Umsetzungsprodukt (B.1-3), das ebenfalls bei Zimmertemperatur flüssig war, wasserlöslich war und keine Isocyanatgruppen mehr enthielt.

### Polymeres Carbodiimid (C):

(C.1): polymeres Carbodiimid auf Basis von m-TMXDI (mit einem titrimetrisch ermittelten NCO-Gehalt von 6,7 Gew.-%. Das entspricht etwa 4,2 Carbodiimidgruppen/Molekül.

### Diole (D):

(D.1) Dipropylenglykol
(D.2) Polyethylenglykol mit einem mittleren Molekulargewicht Mₙ von 600 g/mol

### Pigment (E.1): Pigmentpräparation

In einer Rührwerkskugelmühle des Typs Drais Superflow DCP SF 12 wurden miteinander vermahlen:

| | |
|---|---|
| 2640 g | Pigment Blau 15:3 |
| 460 g | n-C₁₈H₃₇O(CH₂CH₂O)₂₅H |
| 600 g | Glycerin |
| 2300 g | destilliertes Wasser |

Das Vermahlen wurde fortgesetzt, bis die Pigmentpartikel einen mittleren Durchmesser von 100 nm aufwiesen. Man erhielt die Pigmentpräparation P(E.1).

### Hilfsstoffe:

(G.1) Copolymer aus Acrylsäure (92 Gew.-%), Acrylamid (7,6 Gew.-%), Methylenbisacrylamid V.1 (0,4 Gew.-%), quantitativ neutralisiert mit Ammoniak (25 Gew.-% in Wasser), Molekulargewicht M_{w} von ca. 150.000g/mol

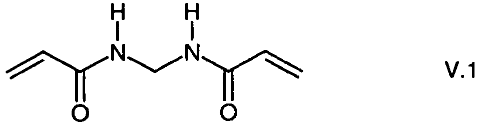

### (G.2) C₁₃-Oxoalkohol, gesättigt

### (G.3): Polydimethylsiloxan, dynamische Viskosität 5.000 mPa·s, bestimmt bei 23°C.

Man stellte Druckpasten nach der folgenden allgemeinen Vorschrift her:

Man verrührte in einem Rührgefäß die Ingredienzien gemäß Tabelle 1, die man in der folgenden Reihenfolge vermischte:
Man legte 200 ml Wasser vor und gab (G.3) zu. Unter Rühren gab man anschließend (C.1) und Bindemittel (A.1) zu. Anschließend gab man unter Rühren Diol (D.1), (G.1), (E.4) und schließlich P(E.1) zu. Man füllte mit Wasser auf einen Liter auf und verrührte danach 15 Minuten mit einem Schnellrührer des Typs Ultra-Turrax mit etwa 6000 Umdrehungen/min.

Man erhielt erfindungsgemäße Druckpasten gemäß Tabelle 1 bzw. die entsprechende Vergleichsdruckpaste.

**Tabelle 1: Zusammensetzung der erfindungsgemäßen Druckpasten DP.2, DP.3 und DP.5 bis DP.8 und der Vergleichsdruckpasten V-DP.1 und V-DP.4**

| Ingredienz | V-DP.1 | DP.2 | DP.3 | V-DP.4 | DP.5 | DP.6 | DP.7 | DP.8 | DP.9 | DP.10 |
|---|---|---|---|---|---|---|---|---|---|---|
| (A.1) | 12 | 12 | 12 | 12 | 12 | 12 | 12 | 12 | 12 | 12 |
| (B.1-1) | - | - | - | - | 4,5 | 4,5 | - | - | - | - |
| (B.1-2) | - | - | - | - | - | - | 4,5 | 4,5 | - | - |
| (B.1-3) | | | | | | | | | 4,5 | 4,5 |
| (C.1) | - | 4,5 | 4,5 | - | - | - | - | - | | |
| (D.1) | - | - | 15 | - | - | 15 | - | 15 | - | 15 |
| P(E.1) | 7 | 7 | 7 | 7 | 7 | 7 | 7 | 7 | 7 | 7 |
| (G.1) | 30 | 30 | 30 | 30 | 30 | 30 | 30 | 30 | 30 | 30 |
| (G.2) | 2 | 2 | 2 | 2 | 2 | 2 | 2 | 2 | 2 | 2 |
| (G.3) | 25 | 25 | 25 | 25 | 25 | 25 | 25 | 25 | 25 | 25 |

Alle Mengenangaben der Ingredienzien sind in g und beziehen sich auf den jeweiligen Feststoff, lediglich die Angaben für Pigmentpräparation P(E.1) sind tel quelle.

### III. Bedrucken von Polypropylen-Textilien

Man bedruckte nach dem Siebdruckverfahren textile Substrate aus Polypropylengewebe, Flächengewicht 170 g/m². Die Druckparameter waren: Rakel 15 mm, Schablonengaze ESTAL MONO E 55, Magnetzugstufe 6, einfacher Druck, kein Muster. Man trocknete 10 Minuten im Trockenschrank bei 80°C und fixierte anschließend auf einem Fixierschrank durch fünfminütiges Erhitzen mit Heißluft bei 110°C.

Man erhielt das Vergleichstextil V-PP.1 und erfindungsgemäße Polypropylen-Textilien PP.2 und PP.3.

Die erfindungsgemäßen textilen Substrate wurden auf Trocken- und Nassreibechtheit nach DIN EN ISO 105-X12 und Waschechtheit nach DIN EN ISO 105-C03 getestet. Bestmögliches Ergebnis: Note 5, schlechtestes mögliches Ergebnis: Note 1.

Man erhielt die folgenden erfindungsgemäßen textilen Substrate und Testergebnisse gemäß Tabelle 2.

**Tabelle 2: Erfindungsgemäß bedruckte textile Substrate und Testergebnisse**

| Druckpaste Nr. | Substrat Nr. | Reibechtheit trocken | Reibechtheit nass |
|---|---|---|---|
| V-DP.1 | V-PP.1 | 3 | 3 |
| DP.2 | PP.2 | 4-5 | 3-4 |
| DP.3 | PP.3 | 4-5 | 4-5 |
| V-DP.4 | V-PP.4 | 3 | 3 |
| DP.5 | PP.5 | 4-5 | 3-4 |
| DP.6 | PP.6 | 4-5 | 4-5 |
| DP.7 | PP.7 | 4-5 | 4 |
| DP.8 | PP.8 | 4-5 | 4-5 |
| DP.9 | PP.9 | 4-5 | 4-5 |
| DP.10 | PP.10 | 4-5 | 4-5 |

Keines der erfindungsgemäß bedruckten textilen Substrate zeigte nachweisbare Emissionen an Formaldehyd.

## Patentansprüche

1. Verfahren zum Bedrucken, Farben oder Beschichten von textilen Substraten, **dadurch gekennzeichnet, dass** man mindestens eine wässrige Formulierung einsetzt, die enthält,
(A) mindestens ein Bindemittel, das erhältlich ist durch Copolymerisation von Ethylen und (Meth)acrylsäure und gegeberrenfalls einem oder mehreren weiteren Comonomeren,
(B) mindestens ein Umsetzungsprodukt von mindestens einem polymeren Carbodiimid (C), das mindestens eine endständige Gruppe aufweist, gewählt aus Carbonsäuregruppen und Isocyanatgruppen, mit mindestens einem Diol, Triol oder Polyol (D), oder
(C) mindestens ein polymeres Carbodiimid, das mindestens eine endständige Gruppe aufweiset, gewählt aus Carbonsäuregruppen und Isocyanatgruppen, und
(D) gegebenenfals mindestens ein Diol, Triol oder Polyol.

2. Verfahren nach Anspruch 1, **dadurch gekennzeichnet, dass** es sich bei der wässrigen Formulierung um eine Druckpaste handelt.

3. Verfahren nach Ansprüche 1 oder 2, dadurch gekenntzeichnet, dass die betreffende wässrige Formulierung weiterhin
(E) mindestens ein Pigment
enthäl.t

4. Verfahren nach einem der Ansprüche 1 bis 3, **dadurch gekennzeichnet dass** man im Anschluss an das Behandeln mit wässriger Formulierung thermisch behandelt.

5. Verfahren nach einem der Ansprüche 1 bis 4, **dadurch gekennzeichnet, dass** flexible Substrate gewählt werden aus flächigen Substraten aus Baumwolle, Polyester und Polyolefinen.

6. Verfahren nach einem der Ansprüche 1 bis 5, **dadurch gekennzeichnet. dass** Bindemittel (A) gewählt wird aus Copolymeren, die als Comonomer (Meth)acrylsäure, Glycidyl(meth)acrylat oder ein C₂-C₁₀-Hydroxyafkyl(meth)-acrylat ein polymerisiert enthalten.

7. Verfähren nach einem der Absprüche 1 bis 6, **dadurch gekennzeichnet, dass** es sich bei polymerem Carbodiimid (C) um ein polymeres Carbodiimid auf Basis von m-TMXDI oder p-TMXDI wandelt.

8. Verfahren nach einem der Ansprüche 1 bis 7, **dadurch gekennzeichnet, dass** man mindestens ein Umsetzungsprodukt (B) von mindestens einem polymeren Carbodiimid (C) mit mindestens einem Diol, Triol oder Polyol (D) einsetzt, das durch Umsetzung von mindestens einem isocyanatgruppen-haltigen Carbodiimid mit Diethylenglykol, Triethylenglykol, Tetraethylenglykol oder Polyethylenglykol erhältlich ist.

9. Verfahren nach einem der Ansprüche 1 bis 8, **dadurch, gekennzeichnet, dass** die betreffende wässrige Formulierung
mindestens ein Mikrokapselmaterial (H)
enthält.

10. Verfahren nach einem der Ansprüche 1 bis 9, **dadurch gekennzeichnet, dass** es sich bei Substraten um textile Substrate aus Polypropylen handelt.

11. Wässrige Formulierungen, enthaltend
(A) mindestens ein Bindemittel, das erhältlich ist durch Copolymerisation von Ethylen und (Meth)acryrsäure und gegebenenfalls einem oder mehreren weiteren Comonomeren,
(B) mindestens ein Umsetzuhgsprodukt von mindestens einem polymeren Carbodiimid (C), das mindestens eine endständige Gruppe aufweiset, gewählt aus Carbonsäuregruppen und Isocyanatgruppen, mit mindestens einem Diol, Triol oder Polyol (D), oder
(C) mindestens ein polymeres Carbodiimid, das mindestens eine endständige Gruppe aufweist, gewählt aus Carbonsäüregrüppen und Isocyanatgruppen, und
(D) gegebenenfalls mindestens ein Diol, Triol oder Polyol.

12. Wässrige Formulierungen nach Anspruch 11, **dadurch gekennzeichnet, dass** es sich bei ihnen um Druckpasten handelt.

13. Wässrige Formulierungen nach Anspruch 11 oder 12, **dadurch gekennzeichnet, dass** sie weiterhin
(E) mindestens ein Pigment
enthalten.

14. Wässrige Formulierungen nach einem der Ansprüche 11 bis 13, **dadurch gekennzeichnet, dass** Bindemittel (A) gewählt wird aus Copolymeren, die als Comonomer (Meth)acrylsäure, Glycidyl(meth)acrylat oder ein C₂-C₁₀ Hydroxyalkyl(meth)acrylat einpolymerisiert enthalten.

15. Wässrige Formulierungen nach einem der Ansprüche 11 bis 14, **dadurch gekennzeichnet, dass** es sich bei sich bei polymerem Carbodiimid (C) um ein polymeres Carbodiimid auf Basis von m-TMXDI oder p-TMXDI handelt.

16. Verfahren zur Herstellung von wässrigen Formulierungen nach einem der Ansprüche 11 bis 15 durch Vermischen von
(A) mindestens einem Bindemittel, das erhältlich ist durch Copolymensation von Ethylen und (methacrylsäure und gegebenenfalls einem oder mehreren weiteren Comonomeren,
(B) mindestens einem Umsetzungsprodukt von mindestens einem polymeren Carbodiimid (C), das mindestens eine endständige Gruppe aufweist, gewählt aus Carbonsäuregruppen und Isocyanatgruppen, mit mindestens einem Diol, Triol oder Polyol (D), oder
(C) mindestens einem polymeren Carbodiimid, das mindestens eine endständige Gruppe aufweist, gewählt aus Carbonsäuregruppen und isocyanatgruppen, und
(D) gegebenenfalls mindestens einem Diol, Triol oder Polyol,
(E) gegebenenfalls mindestens einem Pigment,
(F) gegebenenfalls mindestens einen Wirkstoff,
(G) gegebenenfalls mindestens einem Hilfsstoff,
(H) gegebenenfalls mindestens ein Mikrokapselmaterial
und gegebenenfalls Auffüllen mit Wasser.

17. Textile Substrate, bedruckt nach einem Verfahren nach einem der Ansprüche 1 bis 10.

## Claims

1. Method for imprinting, dyeing or coating of textile substrates, **characterized in that** at least one aqueous formulation is applied, which comprises
(A) at least one binding agent, which is obtainable by copolymerization of ethylene and (meth) acrylic acid and if applicable, one or a plurality of further co-monomers,
(B) at least one reaction product of at least one polymeric carbodiimide (C), which has at least one terminal group selected from carboxylic acid groups and isocyanate groups with at least one diol, triol or polyol (D), or
(C) at least one polymeric carbodiimide, which has at least one terminal group selected from carboxylic acid groups and isocyanate groups, and
(D) if applicable, at least one diol, triol or polyol.

2. Method as claimed in claim 1, **characterized in that** the aqueous formulation is a printing paste.

3. Method as claimed in claim 1 or 2, **characterized in that** the aqueous solution concerned further comprises
(E) at least one pigment.

4. Method as claimed in one of claims 1 to 3, **characterized in that** the treatment with aqueous formulation is followed by thermal treatment.

5. Method as claimed in one of claims 1 to 4, **characterized in that** flexible substrates are selected from planar substrates made of cotton, polyester and polyolefins.

6. Method as claimed in one of claims 1 to 5, **characterized in that** binding agent (A) is selected from copolymers which comprise as polymerized monomers (meth) acrylic acid, glycidyl (meth) acrylate or a C₂-C₁₀ hydroxyalkyl (meth) acrylate.

7. Method as claimed in one of claims 1 to 6, **characterized in that** polymeric carbodiimide (C) is a polymeric carbodiimide based on m-TMXDI or p-TMXDI.

8. Method as claimed in one of claims 1 to 7, **characterized in that** the at least one reaction product (B) of the at least one polymeric carbodiimide (C) with at least one diol, triol or polyol (D) is applied, which is obtainable by conversion of at least one isocyanate-groups-containing carbodiimide with diethylene glycol, triethylene glycol, tetraethylene glycol or polyethylene glycol.

9. Method as claimed in one of claims 1 to 8, **characterized in that** the aqueous formulation concerned comprises
at least one microcapsule material (H).

10. Method as claimed in one of claims 1 to 9, **characterized in that** the substrates are textile substrates made of polypropylene.

11. Aqueous formulation comprising
(A) at least one binding agent, which is obtainable by copolymerization of ethylene and (meth) acrylic acid and if applicable, one or a plurality of further co-monomers,
(B) at least one reaction product of at least one polymeric carbodiimide (C), which has at least one terminal group selected from carboxylic acid groups and isocyanate groups, with at least one diol, triol or polyol (D), or
(C) at least one polymeric carbodiimide, which has at least one terminal group selected from carboxylic acid groups and isocyanate groups, and
(D) if applicable, at least one diol, triol or polyol.

12. Aqueous formulation as claimed in claim 11, **characterized in that** they are printing pastes.

13. Aqueous formulation as claimed in claim 11 or 12, **characterized in that** they further comprise
(E) at least one pigment.

14. Aqueous formulation as claimed in one of claims 11 to 13, **characterized in that** binding agent (A) is selected from copolymers comprising as polymerized comonomer (meth) acrylic acid, glycidyl (meth) acrylate or a C₂-C₁₀ hydroxy (meth) acrylate.

15. Aqueous formulation as claimed in one of claims 11 to 14, **characterized in that** polymeric carbodiimide (C) is a polymeric carbodiimide based on m-TMXDI or p-TMXDI.

16. Method for preparation of aqueous formulations as claimed in one of claims 11 to 15 by mixing of
(A) at least one binding agent, which is obtainable by copolymerization of ethylene and (meth) acrylic acid and if applicable, one or a plurality of further Co-monomers,
(B) at least one reaction product of at least one polymeric carbodiimide (C), which has at least one terminal group selected from carboxylic acid groups and isocyanate groups with at least one diol, triol or polyol (D), or
(C) at least one polymeric carbodiimide, which has at least one terminal group selected from carboxylic acid groups and isocyanate groups, and
(D) if applicable, at least one diol, triol or polyol,
(E) if applicable, at least one pigment,
(F) if applicable, at least one active ingredient,
(G) if applicable, at least one adjuvant,
(H) if applicable, at least one microcapsule material
and if applicable, topping up with water.

17. Textile substrate imprinted according to a method as claimed in one of claims 1 to 10.

## Revendications

1. Procédé pour l'impression, la coloration ou le revêtement de substrats textiles, **caractérisé en ce que** l'on utilise au moins une formulation aqueuse, laquelle contient
(A) au moins un liant, lequel est obtenu par copolymérisation d'éthylène et d'acide (méth)acrylique et éventuellement d'un ou plusieurs autres comonomères,
(B) au moins un produit de réaction d'au moins un carbodiimide polymère (C), lequel présente au moins un groupe terminal, choisi parmi des groupes acide carboxylique et des groupes isocyanate, avec au moins un diol, triol ou polyol (D), ou
(C) au moins un carbodiimide polymère, lequel présente au moins un groupe terminal, choisi parmi des groupes acide carboxylique et des groupes isocyanate, et
(D) éventuellement au moins un diol, triol ou polyol.

2. Procédé selon la revendication 1, **caractérisé en ce qu'**il s'agit pour la formulation aqueuse d'une pâte d'impression.

3. Procédé selon la revendication 1 ou 2, **caractérisé en ce que** la formulation aqueuse concernée contient de plus
(E) au moins un pigment.

4. Procédé selon l'une quelconque des revendications 1 à 3, **caractérisé en ce que** l'on traite thermiquement à la fin de la manipulation avec une formulation aqueuse.

5. Procédé selon l'une quelconque des revendications 1 à 4, **caractérisé en ce que** l'on choisit des substrats flexibles constitués de substrats plans de coton, de polyester et de polyoléfines.

6. Procédé selon l'une quelconque des revendications 1 à 5, **caractérisé en ce que** l'on choisit le liant (A) parmi des copolymères, lesquels contiennent comme comonomère introduit par polymérisation de l'acide (méth)acrylique, du (méth)acrylate de glycidyle ou un (méth)acrylate d'hydroxyalkyle en C₂-C₁₀.

7. Procédé selon l'une quelconque des revendications 1 à 6, **caractérisé en ce qu'**il s'agit pour le carbodiimide polymère (C) d'un carbodiimide polymère à base de m-TMXDI ou p-TMXDI.

8. Procédé selon l'une quelconque des revendications 1 à 7, **caractérisé en ce que** l'on utilise au moins un produit de réaction (B) d'au moins un carbodiimide polymère (C) avec au moins un diol, triol ou polyol (D), lequel est obtenu par réaction d'au moins un carbodiimide contenant des groupes isocyanate avec du diéthylèneglycol, triéthylèneglycol, tétraéthylèneglycol ou polyéthylèneglycol.

9. Procédé selon l'une quelconque des revendications 1 à 8, **caractérisé en ce que** la formulation aqueuse concernée contient au moins un matériau de microcapsule (H).

10. Procédé selon l'une quelconque des revendications 1 à 9, **caractérisé en ce qu'**il s'agit pour les substrats de substrats textiles de polypropylène.

11. Formulations aqueuses, contenant
(A) au moins un liant, lequel est obtenu par copolymérisation d'éthylène et d'acide (méth)acrylique et éventuellement d'un ou plusieurs autres comonomères,
(B) au moins un produit de réaction d'au moins un carbodiimide polymère (C), lequel présente au moins un groupe terminal, choisi parmi des groupes acide carboxylique et des groupes isocyanate, avec au moins un diol, triol ou polyol (D), ou
(C) au moins un carbodiimide polymère, lequel présente au moins un groupe terminal, choisi parmi des groupes acide carboxylique et des groupes isocyanate, et
(D) éventuellement au moins un diol, triol ou polyol.

12. Formulations aqueuses selon la revendication 11, **caractérisées en ce qu'**il s'agit pour celles-ci de pâtes d'impression.

13. Formulations aqueuses selon la revendication 11 ou 12, **caractérisées en ce qu'**elles contiennent de plus
(E) au moins un pigment.

14. Formulations aqueuses selon l'une quelconque des revendications 11 à 13, **caractérisées en ce que** le liant (A) est choisi parmi des copolymères, lesquels contiennent comme comonomère introduit par polymérisation de l'acide (méth)acrylique, du (méth)acrylate de glycidyle ou un (méth)acrylate d'hydroxyalkyle en C₂-C₁₀.

15. Formulations aqueuses selon l'une quelconque des revendications 11 à 14, **caractérisées en ce qu'**il s'agit pour le carbodiimide polymère (C) d'un carbodiimide polymère à base de m-TMXDI ou p-TMXDI.

16. Procédé pour la préparation de formulations aqueuses selon l'une quelconque des revendications 11 à 15 par mélange de
(A) au moins un liant, lequel est obtenu par copolymérisation d'éthylène et d'acide (méth)acrylique et éventuellement d'un ou plusieurs autres comonomères,
(B) au moins un produit de réaction d'au moins un carbodiimide polymère (C), lequel présente au moins un groupe terminal, choisi parmi des groupes acide carboxylique et des groupes isocyanate, avec au moins un diol, triol ou polyol (D), ou
(C) au moins un carbodiimide polymère, lequel présente au moins un groupe terminal, choisi parmi des groupes acide carboxylique et des groupes isocyanate, et
(D) éventuellement au moins un diol, triol ou polyol,
(E) éventuellement au moins un pigment,
(F) éventuellement au moins un principe actif,
(G) éventuellement au moins un auxiliaire,
(H) éventuellement au moins un matériau de microcapsule et éventuellement remplissage avec de l'eau.

17. Substrats textiles, imprimés selon un procédé selon l'une quelconque des revendications 1 à 10.
